(19) Europäisches Patentamt
European Patent Office
Office européen des brevets

(11) EP 4 534 603 A1

(12) **EUROPEAN PATENT APPLICATION**
published in accordance with Art. 153(4) EPC

(43) Date of publication:
**09.04.2025 Bulletin 2025/15**

(21) Application number: **23811678.4**

(22) Date of filing: **15.05.2023**

(51) International Patent Classification (IPC):
***C08L 69/00*** *(2006.01)* ***C08G 64/00*** *(2006.01)*
***C08K 5/098*** *(2006.01)*

(52) Cooperative Patent Classification (CPC):
**C08G 64/00; C08K 5/098; C08L 69/00**

(86) International application number:
**PCT/JP2023/018171**

(87) International publication number:
**WO 2023/228804 (30.11.2023 Gazette 2023/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.05.2022 JP 2022087227**

(71) Applicant: **Mitsubishi Chemical Corporation**
**Tokyo 100-8251 (JP)**

(72) Inventor: **TEZUKA, Rie**
**Tokyo 100-8251 (JP)**

(74) Representative: **Hoffmann Eitle**
**Patent- und Rechtsanwälte PartmbB**
**Arabellastraße 30**
**81925 München (DE)**

(54) **RESIN COMPOSITION, FILM, CARD, AND PASSPORT**

(57) A resin composition containing: a resin component containing a polycarbonate resin (A) including a structural unit (A1) derived from a dihydroxy compound, the dihydroxy compound including, as a part of the structure thereof, a moiety represented by Formula (1); an inorganic filler; and a metal salt-based stabilizer, with the proviso that a case where the moiety represented by Formula (1) is a part of $-CH_2-O-H$ is excluded.

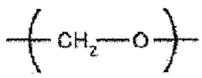 (1)

EP 4 534 603 A1

## Description

Technical Field

The present invention relates to a resin composition, and a film, a card, and a passport, each of which contains the resin composition.

Background Art

Cards and passports are used in various environments for a long period of time and are subjected to various processing, and thus are required to have high wet-heat stability (wet-heat resistance). In addition, in recent years, to reduce the load on the environment, changing a part of a resin raw material from a fossil fuel-derived resin to a plant-derived resin has been studied, and use of a plant-derived resin in a resin film used in a card and a passport has also been studied. For example, the use of a resin composition in a sheet for cards is discussed in Patent Literature 1. The resin composition contains, as a main component, a polycarbonate resin including a structural unit derived from isosorbide or its stereoisomer and having a glass transition temperature of less than 130°C (see Patent Literature 1).

Cards, passports, and the like are usually produced by laminating a plurality of resin films and integrating them by hot pressing. They have a layer structure including, for example, multiple layers of core sheets laminated between a pair of oversheets or including a laser marking sheet or the like further provided between the oversheet and the core sheet in the structure above. With this structure, usually, the core sheet has a high thickness ratio to the entire product. In addition, this core sheet is required to have concealability and is usually blended with a filler, such as titanium oxide.

Citation List

Patent Literature

Patent Literature 1: JP 2012-030574 A

Summary of Invention

Technical Problem

However, studies by the present inventor have found that the use of a polycarbonate resin including a structural unit derived from a specific dihydroxy compound, such as isosorbide, makes a resulting product more prone to yellowing in a high-temperature and high-humidity environment than a common bisphenol A-type polycarbonate resin. In addition, the studies by the present inventor have also found that inclusion of a filler such as titanium oxide makes the problem of yellowing more significant.

Thus, an object of the present invention is to provide a resin composition, a film, and the like having excellent wet-heat resistance and less likely to cause yellowing even though a polycarbonate resin derived from a specific dihydroxy compound, such as isosorbide, is used.

Solution to Problem

As a result of diligent studies, the present inventor has found that the above problem can be resolved by blending a metal salt-based stabilizer to a resin composition containing an inorganic filler in addition to a polycarbonate resin including a structural unit derived from a specific dihydroxy compound, such as isosorbide, and has completed the present invention described below. That is, the present invention provides the following [1] to [29].

[1] A resin composition containing:

a resin component containing a polycarbonate resin (A) having a structural unit (A1) derived from a dihydroxy compound, the dihydroxy compound including, as a part of the structure thereof, a moiety represented by Formula (1),

[Chem. 1]

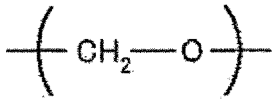 (1);

an inorganic filler; and
a metal salt-based stabilizer;

with the proviso that a case where the moiety represented by Formula (1) is a part of - $CH_2$-O-H is excluded.

[2] The resin composition according to [1], in which the metal salt-based stabilizer contains at least one selected from the group consisting of a zinc salt, a magnesium salt, a calcium salt, an aluminum salt, and a copper salt.

[3] The resin composition according to [1] or [2], in which the metal salt-based stabilizer contains a zinc salt.

[4] The resin composition according to any of [1] to [3], in which the metal salt-based stabilizer contains a fatty acid metal salt.

[5] The resin composition according to [4], in which a fatty acid in the fatty acid metal salt has 4 to 30 carbon atoms.

[6] The resin composition according to [4] or [5], in which a fatty acid in the fatty acid metal salt contains a hydroxy fatty acid.

[7] The resin composition according to any of [1] to [6], in which the inorganic filler contains a metal oxide.

[8] The resin composition according to any of [1] to [7], in which the inorganic filler contains titanium oxide.

[9] The resin composition according to any of [1] to [8], in which the resin composition contains the metal salt-based stabilizer at a content of 0.01 parts by mass or greater and 3 parts by mass or less per 100 parts by mass of the resin component.

[10] The resin composition according to any of [1] to [9], in which a content ratio of the inorganic filler to the metal salt-based stabilizer (inorganic filler/metal salt-based stabilizer) is 1 or greater and 1200 or less on a mass basis.

[11] A resin composition containing:

a resin component containing a polycarbonate resin (A) including a structural unit (A1) derived from a dihydroxy compound, the dihydroxy compound, as a part of the structure thereof, including a moiety represented by Formula (1),

[Chem. 2]

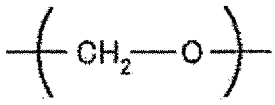 (1);

an inorganic filler; and
a compound (C),
in which
a metal element is detected by inductively coupled plasma atomic emission spectroscopy (ICP-AES), and
an ester having an aliphatic group is detected by gas chromatography-mass spectrometry (GC-MS),
with the proviso that a case where the moiety represented by Formula (1) is a part of -$CH_2$-O-H is excluded.

[12] The resin composition according to [11], in which the ester having an aliphatic group is a fatty acid ester.

[13] The resin composition according to any of [1] to [12], in which the resin composition contains the inorganic filler at a content of 5 parts by mass or greater and 90 parts by mass or less per 100 parts by mass of the resin component.

[14] The resin composition according to any of [1] to [13], further containing an impact modifier.

[15] The resin composition according to [14], in which the resin composition contains the impact modifier at a content of 1 part by mass or greater and 30 parts by mass or less per 100 parts by mass of the resin component.

[16] The resin composition according to any of [1] to [15], in which the polycarbonate resin (A) contains the structural unit (A1) at a content of 30 mol% or greater in a structural unit derived from a dihydroxy compound.

[17] The resin composition according to any of [1] to [16], in which the polycarbonate resin (A) contains the structural unit (A1) at a content of 80 mol% or less in a structural unit derived from the dihydroxy compound.

[18] The resin composition according to any of [1] to [17], in which the polycarbonate resin (A) further contains a structural unit (A2), the structural unit (A2) being derived from at least one dihydroxy compound selected from the

group consisting of an aliphatic dihydroxy compound and an alicyclic dihydroxy compound, and the structural unit (A2) being a structural unit other than the structural unit (A1).

[19] The resin composition according to any of [1] to [18], in which the resin composition is for a card or a passport.

[20] The resin composition according to [19], in which the resin composition is used for a core sheet of the card or the passport.

[21] A film including a resin layer constituted of the resin composition described in any of [1] to [20].

[22] A card including:

the resin composition described in any of [1] to [20]; or
the film described in [21].

[23] A passport including:

the resin composition described in any of [1] to [20]; or
the film described in [21].

[24] Use of the resin composition described in any of [1] to [20] to prevent color tone change.

[25] A method of preventing color tone change using the resin composition described in any of [1] to [20].

[26] Use of a metal salt-based stabilizer to prevent color tone change of a resin composition,

the resin composition containing

a resin component containing a polycarbonate resin (A) including a structural unit (A1) derived from a dihydroxy compound, the dihydroxy compound including, as a part of the structure thereof, a moiety represented by Formula (1),

[Chem. 3]

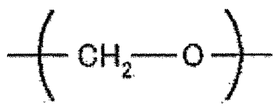
(1);

and
an inorganic filler,

with the proviso that a case where the moiety represented by Formula (1) is a part of - $CH_2$-O-H is excluded.

[27] A film for a card or a passport,

the film containing

a resin component containing a polycarbonate resin (A) having a structural unit (A1) derived from a dihydroxy compound, the dihydroxy compound including, as a part of the structure thereof, a moiety represented by Formula (1),

[Chem. 4]

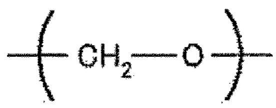
(1);

titanium oxide; and
a metal salt-based stabilizer,

in which

a content of the titanium oxide is 5 parts by mass or greater and 90 parts by mass or less per 100 parts by mass of the resin component,
with the proviso that a case where the moiety represented by Formula (1) is a part of $-CH_2-O-H$ is excluded.

[28] A card including a film,
in which

the film contains:

a resin component containing a polycarbonate resin (A) having a structural unit (A1) derived from a dihydroxy compound, the dihydroxy compound including, as a part of the structure thereof, a moiety represented by Formula (1),

[Chem. 5]

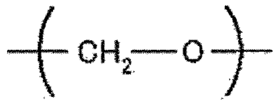
(1);

titanium oxide; and
a metal salt-based stabilizer, and

a content of the titanium oxide is 5 parts by mass or greater and 90 parts by mass or less per 100 parts by mass of the resin component,
with the proviso that a case where the moiety represented by Formula (1) is a part of $-CH_2-O-H$ is excluded.

[29] A passport containing a film,
in which

the film includes

a resin component containing a polycarbonate resin (A) having a structural unit (A1) derived from a dihydroxy compound, the dihydroxy compound including, as a part of the structure thereof, a moiety represented by Formula (1),

[Chem. 6]

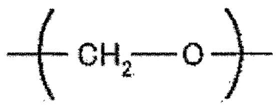
(1);

titanium oxide; and
a metal salt-based stabilizer, and

a content of the titanium oxide is 5 parts by mass or greater and 90 parts by mass or less per 100 parts by mass of the resin component,
with the proviso that a case where the moiety represented by Formula (1) is a part of $-CH_2-O-H$ is excluded.

Advantageous Effects of Invention

According to the present invention, there can be provided the resin composition, the film, and the like having excellent wet-heat resistance and less likely to cause yellowing even though a polycarbonate resin derived from a specific dihydroxy compound, such as isosorbide, is used.

Brief Description of Drawings

FIG. 1 is a schematic view illustrating a layer structure in a card.
FIG. 2 is a schematic view illustrating a layer structure in a passport.

Description of Embodiments

Hereinafter, the present invention will be described in detail with reference to embodiments. However, the present invention is not limited to the embodiments described below. In addition, the term "film" and the term "sheet" used in the following descriptions are not clearly distinguished from each other, and what is referred to as "film" also encompasses a "sheet", and what is referred to as "sheet" also encompasses a "film".

Resin Composition

Polycarbonate Resin (A)

A resin composition of the present invention (which may be hereinafter referred to as "the present resin composition") contains a resin component including a polycarbonate resin (A) including a structural unit (which may be hereinafter referred to as the structural unit (A1)) derived from a dihydroxy compound, the dihydroxy compound including, as a part of the structure thereof, a moiety represented by Formula (1):

[Chem. 7]

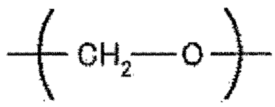

(1)

with the proviso that a case where the moiety represented by Formula (1) is a part of - $CH_2$-O-H is excluded. That is, the dihydroxy compound refers to a compound at least containing two hydroxyl groups and further the moiety of Formula (1).

**In** the present invention, the use of the polycarbonate resin (A) having the above structure improves the degrees of biomass of the present resin composition, a film formed from the present resin composition, and a final product, such as a card or a passport, containing the present resin composition, and can reduce the environmental load. **In** addition, when a film formed from the resin composition is molded by hot pressing, the use of the polycarbonate resin (A) enables the film to fuse at a low temperature and can provide good hot-pressing suitability. Furthermore, the use of the polycarbonate resin (A) also readily provides good solvent resistance and the like of the present resin composition.

The dihydroxy compound including, as a part of the structure thereof, the moiety represented by Formula (1) is not particularly limited as long as it has a structure represented by Formula (1) in the molecule, but specific examples include a compound having an aromatic group in a side chain and having, in the main chain, an ether group attached to the aromatic group, such as 9,9-bis(4-(2-hydroxyethoxy)phenyl)fluorene, 9,9-bis(4-(2-hydroxyethoxy)-3-methylphenyl)fluorene, 9,9-bis(4-(2-hydroxyethoxy)-3-isopropylphenyl)fluorene, 9,9-bis(4-(2-hydroxyethoxy)-3-isobutylphenyl)fluorene, 9,9-bis(4-(2-hydroxyethoxy)-3-tert-butylphenyl)fluorene, 9,9-bis(4-(2-hydroxyethoxy)-3-cyclohexylphenyl)fluorene, 9,9-bis(4-(2-hydroxyethoxy)-3-phenylphenyl)fluorene, 9,9-bis(4-(2-hydroxyethoxy)-3,5-dimethylphenyl)fluorene, and 9,9-bis(4-(2-hydroxyethoxy)-3-tert-butyl-6-methylphenyl)fluorene, 9,9-bis(4-(3-hydroxy-2,2-dimethylpropoxy)phenyl) fluorene; and a dihydroxy compound having a cyclic ether structure, such as a dihydroxy compound represented by Formula (2) and spiroglycol represented by Formula (3).

Among the above, the dihydroxy compound is preferably a dihydroxy compound having a cyclic ether structure and particularly preferably an anhydrous sugar alcohol as represented by Formula (2). More specific examples of the dihydroxy compound represented by Formula (2) include isosorbide, isomannide, and isoidet, which are stereoisomeric to each other. **In** addition, examples of the dihydroxy compound represented by Formula (3) include 3,9-bis(1,1-dimethyl-2-hydroxyethyl)-2,4,8,10-tetraoxaspiro(5.5)undecane (common name: spiroglycol), 3,9-bis(1,1-diethyl-2-hydroxyethyl)-2,4,8, 10-tetraoxaspiro(5.5)undecane, and 3,9-bis(1,1-dipropyl-2-hydroxyethyl)-2,4,8,10-tetraoxaspiro(5.5)undecane.

One of these may be used alone or two or more may be used in combination.

[Chem. 8]

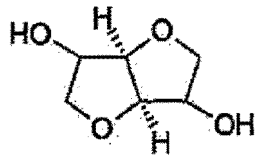

(2)

[Chem. 9]

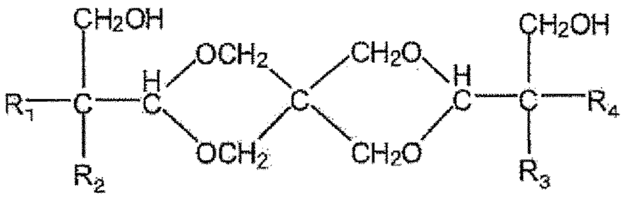

(3)

In Formula (3), $R_1$ to $R_4$ are each independently an alkyl group having from 1 to 3 carbon atoms.

The dihydroxy compound represented by Formula (2) is an ether diol that can be produced from a glucide using a plant-derived material as a raw material. In particular, isosorbide can be produced at low cost by hydrogenating D-glucose produced from starch and then dehydrating the hydrogenated product, and is abundantly available as a resource. For these reasons, isosorbide is most suitably used.

The polycarbonate resin (A) can further contain, as the structural unit derived from a dihydroxy compound, a structural unit other than the structural unit (A1), and preferably contains, for example, a structural unit (which may be hereinafter referred to as a structural unit (A2)) derived from at least one dihydroxy compound selected from an aliphatic dihydroxy compound and an alicyclic dihydroxy compound.

The number of carbon atoms of the aliphatic dihydroxy compound is not particularly limited, but examples include an aliphatic dihydroxy compound having preferably from about 2 to 12 carbon atoms and more preferably from 2 to 6 carbon atoms. Specific examples include ethylene glycol, 1,3-propanediol, 1,4-butanediol, 1,5-pentanediol, neopentyl glycol, 1,6-hexanediol, 1,7-heptanediol, 1,8-octanediol, 1,9-nonanediol, 2-ethyl-1,6-hexanediol, 2,2,4-trimethyl-1,6-hexanediol, 1,10-decanediol, 1,12-dodecanediol, hydrogenated dilinoleyl glycol, and hydrogenated dioleyl glycol. The aliphatic dihydroxy compound is preferably at least one selected from ethylene glycol, 1,3-propanediol, 1,4-butanediol, 1,5-pentanediol, 1,6-hexanediol, 1,9-nonanediol, 1, 10-decanediol, and 1,12-dodecanediol, and more preferably at least one selected from ethylene glycol, 1,3-propanediol, 1,4-butanediol, 1,5-pentanediol, and 1,6-hexanediol. In addition, for the structural unit derived from an aliphatic dihydroxy compound, for example, those described in WO 2004/111106 can also be used.

The structural unit derived from an alicyclic dihydroxy compound preferably contains at least one of a 5-membered ring structure or a 6-membered ring structure, and in particular, a 6-membered ring structure may be fixed in a chair conformation or a boat conformation by a covalent bond. A structural unit derived from an alicyclic dihydroxy compound with a structure of one of these can increase the heat resistance of the resulting polycarbonate resin (A).

The number of carbon atoms contained in the alicyclic dihydroxy compound is, for example, from 5 to 70, preferably from 6 to 50, and more preferably from 8 to 30.

The alicyclic dihydroxy compound is preferably at least one selected from cyclohexanedimethanol, tricyclodecanedimethanol, adamantanediol, and pentacyclopentadecanedimethanol, and from the viewpoint of economic efficiency and heat resistance, more preferably cyclohexanedimethanol or tricyclodecanedimethanol, and even more preferably cyclohexanedimethanol. The cyclohexanedimethanol is particularly preferably 1,4-cyclohexanedimethanol in terms of industrial availability.

In addition, for the structural unit derived from an alicyclic dihydroxy compound, those described in WO 2007/148604 can also be used.

A content of the structural unit (A1) in the polycarbonate resin (A) is preferably 30 mol% or greater, more preferably 40 mol% or greater, and even more preferably 45 mol% or greater, and is preferably 80 mol% or less, more preferably 75 mol% or less, even more preferably 70 mol% or less, and still more preferably 65 mol% or less in the structural unit derived from a dihydroxy compound. The polycarbonate resin (A) containing the structural unit (A1) in the above range can effectively prevent coloration, such as those due to the carbonate structure and/or due to an impurity contained in a trace amount as a consequence of use of a plant resource material. And such a polycarbonate resin (A) can easily increase the transparency of the resin composition and can prevent yellowing and the like. The polycarbonate resin (A) containing the structural unit (A1) in the above range also readily achieves an appropriate balance among physical properties, such as moldability, mechanical strength, and heat resistance. A polycarbonate resin composed only of the structural unit (A1) may

have some difficulty in achieving such a balance.

On the other hand, a content of the structural unit (A2) in the polycarbonate resin (A) is preferably 20 mol% or greater, more preferably 25 mol% or greater, even more preferably 30 mol% or greater, and still more preferably 35 mol% or greater, and is preferably 70 mol% or less, more preferably 60 mol% or less, and even more preferably 55 mol% or less in the structural unit derived from a dihydroxy compound.

In the polycarbonate resin (A), the structural unit derived from a dihydroxy compound is preferably constituted of the structural unit (A1) and the structural unit (A2) but may contain a structural unit derived from another dihydroxy compound as long as the object of the present invention is not impaired. Specific examples include a structural unit produced by copolymerizing a small amount of an aromatic ring-containing dihydroxy compound represented by bisphenol, such as 2,2-bis(4-hydroxyphenyl)propane (commonly called bisphenol A). The aromatic ring-containing dihydroxy compound can be expected to be able to efficiently improve the heat resistance and moldability. However, a large blending amount of an aromatic ring-containing dihydroxy compound tends to cause a problem in the weather resistance. Thus, an aromatic ring-containing dihydroxy compound is favorably used in an amount not causing a problem in the weather resistance.

Examples of the aromatic ring-containing dihydroxy compound other than bisphenol A include $\alpha,\alpha'$-bis(4-hydroxyphenyl)-m-diisopropylbenzene (bisphenol M), 9,9-bis(4-hydroxy-3-methylphenyl)fluorene, 1,1-bis(4-hydroxyphenyl)cyclohexane, 1,1-bis(4-hydroxyphenyl)-3,3,5-trimethylcyclohexane, 4,4'-dihydroxy-3,3'-dimethyldiphenyl sulfide, 2,2-bis(4-hydroxy-3-methylphenyl)propane (bisphenol C), 2,2-bis(4-hydroxyphenyl)-1,1,1,3,3,3-hexafluoropropane (bisphenol AF), and 1,1-bis(4-hydroxyphenyl)decane.

The glass transition temperature of the polycarbonate resin (A) is, for example, 70°C or higher, preferably 80°C or higher, more preferably 85°C or higher, and even more preferably 90°C or higher, and for example, 140°C or less, preferably 130°C or less, more preferably 125°C or less, and even more preferably 120°C or less. In addition, the polycarbonate resin (A) usually preferably has a single glass transition temperature.

With the glass transition temperature in the above range, the polycarbonate resin (A) readily achieves low-temperature heat fusibility and furthermore readily imparts heat resistance to the resin composition.

The glass transition temperature can be adjusted by appropriately selecting the proportion of each structural unit constituting the polycarbonate resin (A). The glass transition temperature of each resin can be determined by measurement using a differential scanning calorimeter. The detailed measurement conditions are favorably as described in Examples.

The polycarbonate resin (A) can be produced by a typical polymerization method and can be produced by either a phosgene method or a transesterification method involving a reaction with a carbonic acid diester. Among these, the method is preferably a transesterification method in which a dihydroxy compound having, as a part of the structure thereof, a moiety represented by Formula (1) and another dihydroxy compound are reacted with a carbonic acid diester in the presence of a polymerization catalyst. The transesterification method is a polymerization method in which a dihydroxy compound, a carbonic acid diester, a basic catalyst, and an acidic substance to neutralize the catalyst are mixed to carry out transesterification reaction.

Examples of the carbonic acid diester include diphenyl carbonate, ditolyl carbonate, bis(chlorophenyl) carbonate, m-cresyl carbonate, dinaphthyl carbonate, bis(biphenyl) carbonate, diethyl carbonate, dimethyl carbonate, dibutyl carbonate, and dicyclohexyl carbonate. Among these, diphenyl carbonate is suitably used.

A molecular weight of the polycarbonate resin (A) can be represented by a reduced viscosity, and the reduced viscosity is, for example, 0.3 dL/g or greater and preferably 0.35 dL/g or greater from the viewpoint of imparting mechanical strength, and for example, 1.2 dL/g or less, preferably 1 dL/g or less, and more preferably 0.8 dL/g or less from the viewpoint of increasing flowability during molding to improve productivity and moldability.

The reduced viscosity is measured by preparing the polycarbonate resin concentration precisely to 0.6 g/dL using dichloromethane as a solvent and using an Ubbelohde viscometer at a temperature of 20.0°C $\pm$ 0.1°C.

For the resin composition, only the polycarbonate resin (A) may be used as a resin component, but the resin composition may contain a resin other than the polycarbonate resin (A) to the extent not contrary to the gist of the present invention. The resin component constituting the resin composition favorably contains the polycarbonate resin (A) as a main component, and the content of the polycarbonate resin (A) is, for example, 50 mass% or greater, preferably 70 mass% or greater, more preferably 90 mass% or greater, and most preferably 100 mass% relative to the total amount of the resin component contained in the resin composition.

Metal Salt-Based Stabilizer

The present resin composition contains a metal salt-based stabilizer. The present resin composition is prone to yellowing when used in a high-temperature and high-humidity environment. However, the present resin composition contains a metal salt-based stabilizer, and this can ensure the wet-heat resistance and prevent yellowing.

The metal salt-based stabilizer is not particularly limited as long as it is a metal salt, but for example, a metal salt

having an aliphatic group can be used. Examples of the aliphatic group include an aliphatic hydrocarbon group and an aliphatic acyl group. The aliphatic group is not particularly limited but preferably has 4 or more carbon atoms, more preferably 6 or more carbon atoms, even more preferably 8 or more carbon atoms, still more preferably 10 or more carbon atoms, and yet more preferably 12 or more carbon atoms, and preferably has 30 or less carbon atoms, more preferably 26 or less carbon atoms, even more preferably 24 or less carbon atoms, still more preferably 20 or less carbon atoms, yet more preferably 18 or less carbon atoms, and still even more preferably 16 or less carbon atoms.

The metal salt is a salt of a metal, such as lithium, sodium, aluminum, calcium, zinc, magnesium, lead, copper, and barium. Among these, from the viewpoint of the wet-heat resistance, the metal salt is preferably a zinc salt, a magnesium salt, a calcium salt, an aluminum salt, or a copper salt, more preferably a zinc salt, a magnesium salt, a calcium salt, or an aluminum salt, and among them, even more preferably a zinc salt.

Specific examples of the metal salt include a fatty acid metal salt and an alkylbenzenesulfonic acid metal salt, and the metal salt is preferably a fatty acid metal salt.

Examples of the alkylbenzene sulfonic acid metal salt include an alkylbenzene sulfonic acid salt whose alkyl group having preferably from 8 to 24 carbon atoms and more preferably from 10 to 16 carbon atoms. Specific examples of the alkylbenzenesulfonic acid metal salt include sodium dodecylbenzenesulfonate.

The fatty acid metal salt is a salt of a fatty acid and the metal described above. The fatty acid in the fatty acid metal salt may be a linear fatty acid or a fatty acid having a branched chain. In addition, the fatty acid may be a saturated fatty acid or an unsaturated fatty acid but is preferably a saturated fatty acid from the viewpoint of the wet-heat resistance.

Furthermore, the fatty acid may be a hydroxy fatty acid having a hydroxy group besides the hydroxy group in a carboxyl group or may be a fatty acid having no hydroxy group besides the hydroxy group in a carboxyl group, but is preferably a hydroxy fatty acid from the viewpoint of improving the wet-heat resistance to prevent yellowing. Moreover, from the viewpoint of easy production of the fatty acid, a fatty acid having no hydroxy group besides the hydroxy group in a carboxyl group is preferred. Still more, a hydroxy fatty acid and a fatty acid other than a hydroxy fatty acid may be used in combination.

Examples of the fatty acid include a fatty acid having from 4 to 30 carbon atoms, preferably from 6 to 26 carbon atoms, more preferably from 8 to 24 carbon atoms, even more preferably from 10 to 20 carbon atoms, still more preferably from 12 to 18 carbon atoms, and yet more preferably from 12 to 16 carbon atoms. The fatty acid having carbon atoms in the above range improves the wet-heat resistance of the present resin composition while maintaining the dispersibility of the metal salt-based stabilizer and readily prevents yellowing.

Specific examples of the fatty acid include caprylic acid; capric acid; lauric acid; myristic acid; palmitic acid; stearic acid; arachidic acid; behenic acid; lignoceric acid; montanic acid; palmitoleic acid; oleic acid; castor oil fatty acid; hydroxylauric acid, such as 3-hydroxylauric acid and 12-hydroxylauric acid; hydroxymyristic acid, such as 2-hydroxymyristic acid and 3-hydroxymyristic acid; hydroxypalmitic acid, such as 2-hydroxypalmitic acid, 10-hydroxypalmitic acid, and 16-hydroxypalmitic acid; hydroxystearic acid, such as 12-hydroxystearic acid; ricinoleic acid; linoleic acid; linolenic acid; and arachidonic acid.

Preferred specific examples of the fatty acid metal salt include zinc laurate, zinc myristate, zinc palmitate, zinc stearate, zinc 12-hydroxystearate, magnesium laurate, magnesium myristate, magnesium palmitate, magnesium stearate, magnesium 12-hydroxystearate, calcium laurate, calcium myristate, calcium palmitate, calcium stearate, calcium 12-hydroxystearate, aluminum laurate, aluminum myristate, aluminum palmitate, aluminum stearate, aluminum 12-hydroxystearate, copper laurate, copper myristate, copper palmitate, and copper stearate. In addition, zinc caprylate, zinc behenate, zinc montanate, or the like is preferred.

Among these, the fatty acid metal salt is more preferably zinc stearate, zinc laurate, zinc 12-hydroxystearate, magnesium 12-hydroxystearate, calcium 12-hydroxystearate, or aluminum stearate, and from the viewpoint of improving the dispersibility of the metal salt-based stabilizer and the wet-heat resistance of the present resin composition in a well-balanced manner and makes it much easier to improve yellowing, the fatty acid metal salt is even more preferably zinc laurate, zinc 12-hydroxystearate, magnesium 12-hydroxystearate, or calcium 12-hydroxystearate, and most preferably zinc laurate or zinc 12-hydroxystearate.

One of the metal salt-based stabilizers may be used alone, or two or more may be used in combination.

The content of the metal salt-based stabilizer is preferably 0.01 parts by mass or greater and 3 parts by mass or less per 100 parts by mass of the resin component contained in the resin composition. When contained at 0.01 parts by mass or greater, the metal salt-based stabilizer can appropriately improve the wet-heat resistance and suppress yellowing of the resin composition even if the resin composition is used in a high-temperature and high-humidity environment. In addition, when contained at 3 parts by mass or less, the metal salt-based stabilizer is likely to exert an effect corresponding to the content.

From the above viewpoint, the content of the metal salt-based stabilizer is more preferably 0.05 parts by mass or greater, even more preferably 0.1 parts by mass or greater, still more preferably 0.15 parts by mass or greater, yet more preferably 0.2 parts by mass or greater, still even more preferably 0.25 parts by mass or greater, and most preferably 0.5 parts by mass or greater per 100 parts by mass of the resin component. **In** addition, reducing the content of the metal salt-based stabilizer readily maintains good mechanical strength and the like of the resin composition and, for example, can ensure the expansion/contraction properties and increase the tensile elongation and the like when the resin composition is formed into a film or the like. From such a viewpoint, the content of the metal salt-based stabilizer is more preferably 2.5 parts by mass or less, even more preferably 2 parts by mass or less, still more preferably 1.5 parts by mass or less, and yet more preferably 1 part by mass or less.

The content of the metal salt-based stabilizer in the resin composition is preferably 0.01 mass% or greater and 2.8 mass% or less based on the total amount of the resin composition. In addition, the content of the metal salt-based stabilizer is more preferably 0.04 mass% or greater, even more preferably 0.08 mass% or greater, still more preferably 0.13 mass% or greater, yet more preferably 0.18 mass% or greater, still even more preferably 0.2 mass% or greater, and most preferably 0.4 mass% or greater based on the total amount of the resin composition. Furthermore, the content of the metal salt-based stabilizer is more preferably 2.3 mass% or less, even more preferably 1.8 mass% or less, still more preferably 1.3 mass% or less, and yet more preferably 0.8 mass% or less based on the total amount of the resin composition.

The presence or absence of the metal salt-based stabilizer in the resin composition can be confirmed, for example, by detecting a metal element by inductively coupled plasma atomic emission spectroscopy (ICP-AES) and detecting an ester having an aliphatic group by gas chromatography-mass spectrometry (GC-MS). In addition, the ester having an aliphatic group can be detected by subjecting a component insoluble in a good solvent for the polycarbonate resin (A), such as tetrahydrofuran or chloroform, to methanol decomposition and detecting by GC-MS of the decomposition product, or extracting the insoluble component with heated methanol and detecting by reactive pyrolysis GC-MS of the extracted component.

Filler

The present resin composition preferably contains a filler. The present resin composition containing a filler has low light transmittance and can exhibit, for example, concealability. Thus, the present composition can be suitably used for a card or a passport and particularly suitably used for a core sheet. In addition, the present resin composition containing a large amount of filler can enhance the laser printability of a laser marking sheet in the case where the laser marking sheet is laminated on a film formed from the present resin composition. For the laser printability, a film formed from the present resin composition containing a large amount of filler reflects a large amount of laser light, and is prone to carbonization by laser light, color development by a laser color former, and the like at the interface between the film formed from the resin composition and the laser marking sheet, and this is considered to enhance the laser printability.

The resin composition containing the polycarbonate resin (A), further containing a filler, is prone to yellowing when used in a high-temperature and high-humidity environment. However, the present resin composition contains the metal salt-based stabilizer described above, thus improves the wet-heat resistance and can appropriately prevent yellowing.

For the filler, an inorganic filler is used. Examples of the inorganic filler include titanium oxide, talc, mica, calcium carbonate, magnesium carbonate, barium oxide, carbon black, silica, lead titanate, potassium titanate, barium titanate, zirconium oxide, magnesium oxide, calcium oxide, aluminum oxide, zinc sulfide, antimony oxide, zinc oxide, boron nitride, aluminum nitride, and barium sulfate. Among these, the filler is preferably a metal oxide. A metal oxide easily causes yellowing and thus makes the effect of inclusion of the metal salt-based stabilizer further evident.

Among those described above, the filler is preferably at least one selected from fillers with a refractive index of 2 or greater, and the refractive index is more preferably 2.2 or greater and even more preferably 2.4 or greater. Examples of the filler with a refractive index of 2 or greater include titanium oxide, lead titanate, potassium titanate, barium titanate, zirconium oxide, magnesium oxide, calcium oxide, zinc sulfide, antimony oxide, zinc oxide, aluminum oxide, boron nitride, aluminum nitride, calcium carbonate, magnesium carbonate, and barium sulfate. The use of the filler with a refractive index of 2 or greater provides even greater concealability and laser printability and also facilitates white coloration. From these viewpoints, the filler is more preferably titanium oxide. The titanium oxide is not particularly limited, but examples include rutile-type titanium oxide and anatase-type titanium oxide. The refractive index of the filler can be measured by the Becke line method.

The average particle size of the filler is not particularly limited but is, for example, 0.01 μm or greater and 1 μm or less, preferably 0.05 μm or greater and 0.8 μm or less, greater preferably 0.08 μm or greater and 0.6 μm or less, even greater preferably 0.1 μm or greater and 0.5 μm or less, and still greater preferably 0.12 μm or greater and 0.4 μm or less. The average particle size refers to an average primary particle size observed with a scanning electron microscope.

The content of the filler in the resin composition is preferably 5 parts by mass or greater and 90 parts by mass or less per 100 parts by mass of the resin component contained in the resin composition. When the filler is contained in an amount of 5 parts by mass or greater, the concealability of a film formed from the present resin composition can be improved. This also facilitates good printability of a laser marking sheet laminated on the film formed from the present resin composition. In addition, when the content of the filler is 90 parts by mass or less, good mechanical properties, such as bending resistance, can be maintained.

From these viewpoints, the content of the filler is more preferably 8 parts by mass or greater, and even more preferably 10 parts by mass or greater. In the case where greater concealability is required, the content is still more preferably 20 parts by mass or greater, yet more preferably 25 parts by mass, still even more preferably 30 parts by mass or greater, and yet even more preferably 35 parts by mass or greater. In addition, the content of the filler is more preferably 80 parts by mass or less, even more preferably 70 parts by mass or less, still more preferably 60 parts by mass or less, yet more preferably 50 parts by mass or less, and still even more preferably 45 parts by mass or less, but the content may be 40 parts by mass or less in the case where greater concealability is not required.

The filler is preferably titanium oxide as described above. Thus, the content of titanium oxide in the resin composition is preferably 5 parts by mass or greater and 90 parts by mass or less per 100 parts by mass of the resin component contained in the resin composition. In addition, the content of titanium oxide is more preferably 8 parts by mass or greater, even more preferably 10 parts by mass or greater, still more preferably 20 parts by mass or greater, yet more preferably 25 parts by mass, still even more preferably 30 parts by mass or greater, and yet even more preferably 35 parts by mass or greater. Furthermore, the content of titanium oxide is more preferably 80 parts by mass or less, even more preferably 70 parts by mass or less, still more preferably 60 parts by mass or less, yet more preferably 50 parts by mass or less, and still even more preferably 45 parts by mass or less, or the content may be 40 parts by mass or less.

A content ratio of the inorganic filler to the metal salt-based stabilizer (inorganic filler/metal salt-based stabilizer) is favorably, for example, 1 or greater and 1200 or less on a mass basis. With the content ratio of the inorganic filler to the metal salt-based stabilizer of 1200 or less, yellowing caused by the inorganic filler can be effectively prevented by the metal salt-based stabilizer. In addition, when the content ratio is 1 or greater, the resin composition can contain an appropriate amount of the inorganic filler while the content of the metal salt-based stabilizer is reduced.

The content ratio (inorganic filler/metal salt-based stabilizer) is preferably 3 or greater, more preferably 5 or greater, even more preferably 8 or greater, and still more preferably 10 or greater. In addition, the content ratio is preferably 400 or less, more preferably 100 or less, even more preferably 60 or less, and still more preferably 30 or less.

Impact Modifier

The present resin composition may contain an impact modifier. The impact modifier contained in the present resin composition mitigates an effect caused by an external impact, such as bending and impact in practical use, and can easily improve the bending durability of a film and the like formed from the present resin composition. In addition, the impact modifier prevents deterioration of softening properties and fluidity at the time of heating and thus good processability can be maintained easily. Furthermore, the present resin composition is prone to yellowing due to the inclusion of an impact modifier in the resin composition. However, the present resin composition contains the metal salt-based stabilizer as described above, and thus the wet-heat resistance can be improved and yellowing is appropriately prevented.

Examples of the impact modifier include a soft styrene-based resin and an elastomer. The elastomer may be a core-shell type elastomer. One of the impact modifiers may be used alone, or two or more may be used in combination. Among the above, the impact modifier is preferably a core-shell type elastomer. The use of core-shell type elastomer further improves the impact resistance and provides even better bending durability.

Examples of the soft styrene-based resin include a block copolymer containing a styrene polymer block and a conjugated diene-based polymer block; and a block copolymer containing a styrene polymer block and an acrylonitrile block.

The styrene content in the soft styrene-based resin is, for example, 5 mass% or greater and 80 mass% or less, but preferably 10 mass% or greater and 50 mass% or less and greater preferably 15 mass% or greater and 30 mass% or less. Styrene contained in an amount in the above range further improves the effect of imparting impact resistance.

For the conjugated diene-based polymer block used in the soft styrene-based resin, a homopolymer of butadiene, isoprene, 1,3-pentadiene, or the like, a copolymer of those, a copolymer containing a monomer copolymerizable with the conjugated diene-based monomer in the block, or the like can be used.

Specific examples of the soft styrene-based resin include a styrene-butadiene-styrene block copolymer (SBS), a styrene-isoprene-styrene block copolymer (SIS), a silicone-acrylic composite rubber-acrylonitrile-styrene copolymer (SAS), a methyl methacrylate-maleic anhydride-styrene copolymer (SMM), an acrylonitrile-styrene copolymer (AS), an acrylonitrile-butadiene-styrene copolymer (ABS), an acrylonitrile-styrene-acrylic rubber copolymer (ASA), and an acrylonitrile-ethylenepropylene-based rubber-styrene copolymer (AES). Specific examples of the commercial products include "Kraton D" series available from Kraton Polymers, "AR-100" series available from ARONKASEI CO., LTD., "Dialac" series available from UMG ABS, Ltd., and "Delpet" series available from Asahi Kasei Chemicals Corporation. In addition, for the soft styrene-based resin, "Dynaron" series available from JSR Corporation, "Tuftec" series available from Asahi Kasei Chemicals Corporation, "Hibler" series available from Kuraray Co., Ltd., or the like can also be used as the styrene-based elastomer described later.

The block copolymer contains a pure block, a random block, a tapered block, and the like, and the form of copolymerization is not particularly limited. In addition, for the block unit of the block copolymer, several repeating units

may overlap. Specifically, in the case of a styrene-butadiene block copolymer, the block unit may be repeated several times as in a styrene-butadiene copolymer, a styrene-butadiene-styrene block copolymer, or a styrene-butadiene-styrene-butadiene block copolymer.

It is also possible to use a hydrogenated styrene-butadiene-styrene block copolymer (SEBS) or a hydrogenated styrene-isoprene-styrene block copolymer (SEPS) in which one, some, or all of the double bonds of the conjugated diene polymer block of SBS or SIS are hydrogenated. Specific examples of the commercial products include "Tuftec H" series available from Asahi Kasei Chemicals Corporation and "Kraton G" series available from Kraton Polymers.

To a soft styrene-based resin, a functional group having polarity can also be added. Specific examples of the functional group having polarity include an acid anhydride group, a carboxylic acid group, a carboxylic acid ester group, a carboxylic acid chloride group, a carboxylic acid amide group, a carboxylic acid salt group, a sulfonic acid group, a sulfonic acid ester group, a sulfonic acid chloride group, a sulfonic acid amide group, a sulfonic acid salt group, an epoxy group, an amino group, an imide group, and an oxazoline group. Among these, an acid anhydride group or an epoxy group is preferably added.

For the soft styrene-based resin to which a functional group having polarity is added, a modified product of SEBS or SEPS is preferably used. Specific examples include a maleic anhydride-modified SEBS, a maleic anhydride-modified SEPS, an epoxy-modified SEBS, and an epoxy-modified SEPS. Specific examples of their commercial products include "Tuftec M" series available from Asahi Kasei Chemicals Corporation, "Dynaron" series available from JSR Corporation, and "Epofriend" series available from Daicel Chemical Industries, Ltd.

In addition, the soft styrene-based resin may be a styrene-based elastomer containing an elastomer component. Among the above, specific examples include a block copolymer of a styrene component with butadiene, isoprene, 1,3-pentadiene, or the like, and a modified product or hydrogenated product of these. More specific examples include SBS, SIS, SEBS, and SEPS.

The elastomer may be an elastomer other than a styrene-based elastomer, and examples include a known elastomer, such as a polyester-based elastomer, a polyolefin-based elastomer, a diene-based elastomer, an acrylic elastomer, a polyamide-based elastomer, a polyurethane-based elastomer, a fluorine-based elastomer, and a silicone-based elastomer. The elastomer is usually a thermoplastic elastomer. The elastomer is preferably a polyester-based elastomer or a styrene-based elastomer described above.

The polyester-based elastomer is a thermoplastic polyester with rubber properties at room temperature, preferably a thermoplastic elastomer containing a polyester-based block copolymer as a main component, and preferably a block copolymer having a high-melting-point and high-crystalline aromatic polyester as a hard segment and an amorphous polyester and/or an amorphous polyether as a soft segment. The content of the soft segment in the polyester-based elastomer is at least from 20 to 95 mol% in all segments, and the content is from 50 to 95 mol% in the case of a block copolymer of polytetramethylene glycol and poly(butylene terephthalate) (PTMG-PBT copolymer). A preferred content of the soft segment is from 50 to 90 mol% and particularly from 60 to 85 mol%. Among these, a polyester ether block copolymer, in particular, a PTMG-PBT copolymer is preferred.

The core-shell type elastomer is composed of an innermost layer (i.e., a core) and one or more outer layers (i.e., shells) covering the innermost layer. The core-shell type elastomer is preferably a core-shell type graft copolymer in which a monomer component graft-copolymerizable with the core is graft-copolymerized as a shell.

The core-shell type graft copolymer usually has a polymer component called a rubber component as a core. In the core-shell type graft copolymer, it is preferable that graft-copolymerization be performed in such a manner that a polymer component constitutes the core and a monomer component copolymerizable with this polymer component constitutes the shell.

The method of producing the core-shell type graft copolymer may be any production method of bulk polymerization, solution polymerization, suspension polymerization, emulsion polymerization, and the like, and the scheme of the copolymerization may be a single-stage graft or multi-stage graft. However, a core-shell type elastomer usually commercially available can be used as it is. Examples of commercially available core-shell type elastomers will be given later.

Specific examples of the polymer component forming the core include a butadiene-based rubber, such as polybutadiene and a styrene-butadiene copolymer; an isoprene-based rubber; an acrylic rubber, such as poly(butyl acrylate), poly(2-ethylhexyl acrylate), and a butyl acrylate-2-ethylhexyl acrylate copolymer; a silicone-based rubber, such as a polyorganosiloxane rubber; a butadiene-acrylic composite rubber; a silicone-acrylic composite rubber, such as an interpenetrating polymer network (IPN) type composite rubber constituted of a polyorganosiloxane rubber and a poly(alkyl acrylate) rubber; an ethylene-$\alpha$-olefin-based rubber, such as an ethylene-propylene copolymer, an ethylene-butene copolymer, and an ethylene-octene copolymer; an ethylene-acrylic rubber; and a fluorine rubber. One of these may be used alone or two or more may be used in combination. Among these, in terms of mechanical properties and surface appearance, the polymer component is preferably at least one selected from a butadiene-based rubber, an acrylic rubber, a silicone-based rubber, and a silicone-acrylic composite rubber, and among them, more preferably at least one selected from a butadiene-based rubber and a silicone-acrylic composite rubber.

Specific examples of the monomer component constituting the shell and graft-copolymerizable with the polymer component of the core include an aromatic vinyl compound; a vinyl cyanide compound; a (meth)acrylic compound, such as a (meth)acrylic acid ester compound, a (meth)acrylic acid compound, and an epoxy group-containing (meth)acrylic acid ester compound, such as glycidyl (meth)acrylate; a maleimide compound, such as maleimide, N-methylmaleimide and N-phenylmaleimide; an $\alpha,\beta$-unsaturated carboxylic acid compound, such as maleic acid, phthalic acid, and itaconic acid, and an anhydride of those (e.g., such as maleic anhydride). One of these monomer components may be used alone, or two or more may be used in combination. Among these, in terms of mechanical properties and surface appearance, the monomer component is preferably an aromatic vinyl compound, a vinyl cyanide compound, or a (meth)acrylic compound, more preferably an aromatic vinyl compound or a (meth)acrylic compound, and in particular, a (meth)acrylic acid ester compound.

Specific examples of the aromatic vinyl compound include styrene, $\alpha$-methylstyrene, 1-vinylnaphthalene, 4-methylstyrene, 4-propylstyrene, 4-cyclohexylstyrene, 4-dodecylstyrene, 2-ethyl-4-benzylstyrene, 4-(phenylbutyl)styrene, or halogenated styrene, and among these, styrene or $\alpha$-methylstyrene is more preferred.

Specific examples of the (meth)acrylic acid ester compound include methyl (meth)acrylate, ethyl (meth)acrylate, butyl (meth)acrylate, cyclohexyl (meth)acrylate, and octyl (meth)acrylate, and among these, methyl (meth)acrylate or ethyl (meth)acrylate, which are relatively easily available, are preferred, and methyl (meth)acrylate is more preferred. The "(meth)acryl" collectively refers to "acryl" and "methacryl".

The core-shell type elastomer is particularly preferably a core-shell type graft copolymer constituted of a core of at least one polymer component selected from a butadiene-based rubber, an acrylic rubber, a silicone-based rubber, and a silicone-acrylic composite rubber, and a shell formed by graft copolymerization of a (meth)acrylic compound, such as a (meth)acrylic ester, and an aromatic vinyl compound around the core. The content of the polymer component of the core in the core-shell type graft copolymer is preferably 40 mass% or greater, more preferably 60 mass% or greater, even more preferably 70 mass% or greater, and still more preferably 80 mass% or greater.

In addition, the total content of the (meth)acrylic compound (in particular, the (meth)acrylic acid ester) component and the aromatic vinyl compound component in the shell of the core-shell type graft copolymer is preferably 30 mass% or greater, more preferably 50 mass% or greater, even more preferably 60 mass% or greater, and still more preferably 70 mass% or greater. In the shell, any one of the (meth)acrylic compound or the aromatic vinyl compound may be used alone, or these may be used in combination.

Preferred specific examples of the core-shell type elastomer include a methyl methacrylate-butadiene-styrene copolymer (MBS), a methyl methacrylate-acrylonitrile-butadiene-styrene copolymer (MABS), a methyl methacrylate-butadiene copolymer (MB), a methyl methacrylate-acrylic rubber copolymer (MA), a methyl methacrylate-acrylic rubber-styrene copolymer (MAS), a methyl methacrylate-acrylic-butadiene rubber copolymer, a methyl methacrylate-acrylic-butadiene rubber-styrene copolymer, and a methyl methacrylate-(acrylic-silicone composite rubber) copolymer.

Examples of commercially available core-shell type graft copolymers include "Paraloid EXL2602", "Paraloid EXL2603", "Paraloid EXL2690", "Paraloid EXL2691J", "Paraloid EXL2650J", "Paraloid EXL2655", "Paraloid EXL2311", "Paraloid EXL2313", "Paraloid EXL2315", "Paraloid KM330", "Paraloid KM336P", and "Paraloid KCZ201" available from Dow Chemical Japan Ltd.; "Metablen C-223A", "Metablen E-901", "Metablen S-2001", "Metablen W-450A", "Metablen SRK-200", "Metablen E-870A", "Metablen S-2006", and "Metablen W-377" available from Mitsubishi Chemical Corporation; and "KaneAce M-210", "KaneAce M-511", "KaneAce M-600", "KaneAce M-400", "KaneAce M-580", "KaneAce M-590", "KaneAce M-711", "KaneAce MR-01", and "KaneAce M-300" available from Kaneka Corporation.

One of these impact modifiers, such as core-shell type graft copolymers, may be used alone, or two or more may be used in combination.

The content of the impact modifier in the resin composition is preferably 1 part by mass or greater and 30 parts by mass or less per 100 parts by mass of the resin component contained in the resin composition. The impact modifier contained in an amount of 1 part by mass or greater appropriately mitigates an effect caused by an external impact and the bending durability and the like can be improved. In addition, the impact modifier contained in an amount of 1 part by mass or greater prevents deterioration of softening properties and fluidity at the time of heating the resin composition, which occurs depending on the type of resin used, and thus good processability can be maintained. On the other hand, with the content of 30 parts by mass or less, the impact modifier can exert an effect corresponding to the content. In addition, this can prevent deterioration of various physical properties, such as heat resistance, wet-heat resistance, and mechanical strength of the resin composition. Furthermore, this can also prevent a decrease in the degree of biomass of the resin composition and an excessive increase in the fluidity of the resin composition during processing.

The content of the impact modifier in the resin composition is more preferably 3 parts by mass or greater, even more preferably 5 parts by mass or greater, and still more preferably 8 parts by mass or greater, and is more preferably 25 parts by mass or less, even more preferably 20 parts by mass or less, and still more preferably 15 parts by mass or less.

Additional Resin Component

The present resin composition may contain a resin component (also referred to as an "additional resin component") other than the polycarbonate resin (A) as described above. For such a resin component, a commonly used known resin is favorably used, and a resin compatible with the polycarbonate resin (A) is preferably used.

The additional resin component is a resin other than the polycarbonate resin (A) and impact modifier described above, and among others, preferably a thermoplastic resin. Examples include a polycarbonate resin other than the polycarbonate resin (A) described above, a polyester resin, a polyolefin resin, an acrylic resin, a polystyrene resin, a polyamide resin, a poly(vinyl chloride) resin, a poly(vinylidene chloride) resin, a poly(vinyl alcohol) resin, an ethylene-vinyl alcohol resin, a polycycloolefin resin, an ethylene-vinyl acetate copolymer resin, an ethylene (meth)acrylate copolymer resin, a poly(phenylene ether) resin, a polyacetal resin, an acrylonitrile-butadiene-styrene copolymer resin, a poly(aryl ether ketone) resin, a polyimide resin, a poly(phenylene sulfide) resin, a polyarylate resin, a polysulfone resin, a polyethersulfone resin, and a fluororesin.

Among these, the additional resin component is preferably a polycarbonate resin other than the polycarbonate resin (A), or a polyester resin. The use of polycarbonate resin provides good bending durability and provides good heat resistance and the like as well. The polycarbonate resin other than the polycarbonate resin (A) may be referred to as a polycarbonate resin (B) in the following description.

Polycarbonate Resin (B)

For the polycarbonate resin (B), a polycarbonate resin other than the polycarbonate resin (A) having the structural unit (A1) described above is used, but a bisphenol-based polycarbonate is preferably used. The use of bisphenol-based polycarbonate improves various mechanical properties and also improves bending durability described above. In addition, the bisphenol-based polycarbonate provides excellent heat resistance and the like.

The bisphenol-based polycarbonate refers to a polycarbonate in which 50 mol% or greater, preferably 70 mol% or greater, and more preferably 90 mol% or greater of the structural units derived from a dihydroxy compound are structural units derived from a bisphenol. The bisphenol-based polycarbonate may be either a homopolymer or a copolymer. In addition, the bisphenol-based polycarbonate may have a branched structure or a linear structure, or may be a mixture of a resin having a branched structure and a resin having only a linear structure.

Specific examples of the bisphenol used in the polycarbonate resin (B) include 2,2-bis(4-hydroxyphenyl)propane (bisphenol A), 1,1-bis(4-hydroxyphenyl)-1-phenylethane (bisphenol AP), 2,2-bis(4-hydroxyphenyl)hexafluoropropane (bisphenol AF), 2,2-bis(4-hydroxyphenyl)butane (bisphenol B), bis(4-hydroxyphenyl)diphenylmethane (bisphenol BP), 2,2-bis(3-methyl-4-hydroxyphenyl)propane (bisphenol C), 1,1-bis(4-hydroxyphenyl)ethane (bisphenol E), bis(4-hydroxyphenyl)methane (bisphenol F), 2,2-bis(4-hydroxy-3-isopropylphenyl)propane (bisphenol G), 1,3-bis(2-(4-hydroxyphenyl)-2-propyl)benzene (bisphenol M), bis(4-hydroxyphenyl)sulfone (bisphenol S), 1,4-bis(2-(4-hydroxyphenyl)-2-propyl) benzene (bisphenol P), 5,5'-(1-methylethylidene)-bis[1,1'-(bisphenyl)-2-ol]propane (bisphenol PH), 1,1-bis(4-hydroxyphenyl)-3,3,5-trimethylcyclohexane (bisphenol TMC), and 1,1-bis(4-hydroxyphenyl)cyclohexane (bisphenol Z). One of the bisphenols may be used alone, or two or more may be used in combination.

For the bisphenol used in the polycarbonate resin (B), 2,2-bis(4-hydroxyphenyl)propane, that is, bisphenol A, is preferably used, but a portion of bisphenol A may be replaced by another bisphenol. The polycarbonate resin (B) is most preferably bisphenol A homopolycarbonate.

Polyester Resin

Examples of the polyester resin used as the resin component include a polyester produced by polycondensation of a dicarboxylic acid and a dihydroxy compound. For the dicarboxylic acid, a dicarboxylic acid derivative, such as an ester or an acid halide of a dicarboxylic acid, may be used for the synthesis of the polyester resin. The use of polyester resin as the resin provides low-temperature fusibility and facilitates the adhesion of a film formed from the present resin composition to another film by heat fusion at a relatively low temperature. In addition, the use of the polyester resin improves processability and the like.

For the dicarboxylic acid used to produce the polyester resin, an aromatic dicarboxylic acid is preferably used from the viewpoint of heat resistance. Thus, the polyester resin preferably contains a structural unit derived from an aromatic dicarboxylic acid.

The aromatic dicarboxylic acid is not particularly limited, and examples include terephthalic acid, isophthalic acid, naphthalene-1,4-dicarboxylic acid, naphthalene-2,6-dicarboxylic acid, naphthalene-2,7-dicarboxylic acid, naphthalene-1,5-dicarboxylic acid, anthracenedicarboxylic acid, 4,4'-diphenyldicarboxylic acid, 4,4'-diphenyl ether dicarboxylic acid, 5-sulfoisophthalic acid, sodium 3-sulfoisophthalate, 2-chloroterephthalic acid, 2,5-dichloroterephthalic acid, and 2-methylterephthalic acid. Among these, the aromatic dicarboxylic acid is preferably terephthalic acid or isophthalic acid and

more preferably terephthalic acid.

One of the aromatic dicarboxylic acids may be used alone, or two or more may be used in combination.

The structural unit derived from an aromatic dicarboxylic acid is contained in the structural unit derived from a dicarboxylic acid in the polyester resin in an amount of, for example, 60 mol% or greater, preferably 70 mol% or greater, more preferably 80 mol% or greater, and even more preferably 90 mol% or greater. In addition, the upper limit is not particularly limited and is 100 mol% or less, but is most preferably 100 mol%.

Furthermore, in addition to the structural unit derived from an aromatic dicarboxylic acid, the polyester resin may contain a small amount (usually 40 mol% or less, e.g., in a range of 30 mol% or less and preferably 20 mol% or less) of a structural unit derived from an aliphatic dicarboxylic acid. The aliphatic dicarboxylic acid is not particularly limited, and examples include oxalic acid, succinic acid, glutaric acid, adipic acid, pimelic acid, sebacic acid, azelaic acid, dodecanedioic acid, dimer acid, 1,3- or 1,4-cyclohexanedicarboxylic acid, cyclopentanedicarboxylic acid, and 4,4'-dicyclohexyldicarboxylic acid. Only one of the aliphatic dicarboxylic acids may be used alone, or two or more may be used in combination.

The polyester resin preferably contains a structural unit derived from a chain dihydroxy compound. When the polyester resin contains a structural unit derived from a chain dihydroxy compound, the present resin composition has good low-temperature fusibility.

The chain dihydroxy compound used in the polyester resin may be linear or may have a branched structure. Specific examples of the chain dihydroxy compound include a chain dihydroxy compound having from about 2 to 18 carbon atoms, such as ethylene glycol (EG), diethylene glycol, 1,2-propylene glycol, 1,3-propanediol, 2,2-dimethyl-1,3-propanediol, 1,4-butanediol, neopentyl glycol, 1,5-pentanediol, 1,6-hexanediol, 1,7-heptanediol, 1,8-octanediol, 1,10-decanediol, 1,12-dodecanediol, triethylene glycol, 1,2-hexadecanediol, and 1,18-octadecanediol; and a polyglycol, such as poly(tetramethylene ether) glycol, polypropylene glycol, and polyethylene glycol. Among these, the chain dihydroxy compound is preferably a chain dihydroxy compound having from 2 to 12 carbon atoms, more preferably one or two or more selected from ethylene glycol, diethylene glycol, 1,3-propanediol, 1,4-butanediol, 1,5-pentanediol, and 1,6-hexanediol, and among them, particularly preferably ethylene glycol (EG).

One of the chain dihydroxy compounds may be used alone, or two or more may be used in combination.

The polyester resin is preferably a copolymer polyester resin in which two or more dihydroxy compounds are used as copolymerization components. Specifically, for the dihydroxy compound used to produce the polyester resin, an alicyclic dihydroxy compound is preferably used in addition to the chain dihydroxy compound. Thus, the polyester resin preferably has a structural unit derived from an alicyclic dihydroxy compound in addition to a structural unit derived from a chain dihydroxy compound. The use of the alicyclic dihydroxy compound is likely to provide good heat resistance, solvent resistance, and the like.

Specific examples of the alicyclic dihydroxy compound include a tetramethylcyclobutanediol, a cyclohexanedimethanol (CHDM), a tricyclodecanedimethanol, an adamantanediol, and a pentacyclopentadecanedimethanol. Among these, the tetramethylcyclobutanediol or the cyclohexanedimethanol is preferred. Examples of the cyclohexanedimethanol include 1,2-cyclohexanedimethanol, 1,3-cyclohexanedimethanol, and 1,4-cyclohexanedimethanol, but 1,4-cyclohexanedimethanol is preferred in terms of industrial availability. In addition, for the tetramethylcyclobutanediol, 2,2,4,4,-tetramethyl-1,3-cyclobutanediol is usually used.

One of the alicyclic dihydroxy compounds may be used alone, or two or more may be used in combination. For the alicyclic dihydroxy compound, at least the cyclohexanedimethanol is preferably used, and from the viewpoint of bending resistance, the tetramethylcyclobutanediol and the cyclohexanedimethanol are preferably used in combination.

In the polyester resin, the proportion of the structural unit derived from the alicyclic dihydroxy compound in a total of 100 mol% of the structural unit derived from the chain dihydroxy compound and the structural unit derived from the alicyclic dihydroxy compound is, for example, 5 mol% or greater, preferably 15 mol% or greater, and more preferably 20 mol% or greater, and for example, 99 mol% or less, preferably 95 mol% or less, more preferably 90 mol% or less, and even more preferably 80 mol% or less. When the polyester resin contains a certain amount or more of the structural unit derived from the alicyclic dihydroxy compound, good heat resistance can be provided. In addition, the polyester resin containing a certain amount or less of the structural unit derived from the alicyclic dihydroxy compound and a certain amount or greater of the structural unit derived from the chain dihydroxy compound is likely to provide good low-temperature fusibility.

The proportion of the structural unit derived from the alicyclic dihydroxy compound in a total of 100 mol% of the structural unit derived from the chain dihydroxy compound and the structural unit derived from the alicyclic dihydroxy compound is, in terms of the low-temperature fusibility, preferably 65 mol% or less, more preferably 55 mol% or less, even more preferably 45 mol% or less, and still more preferably 40 mol% or less.

However, in the polyester resin, particularly in terms of the heat resistance and solvent resistance of the storage elastic modulus, thermal expansion/contraction rate, and the like in a high-temperature environment, the proportion of the structural unit derived from the alicyclic dihydroxy compound in a total of 100 mol% of the structural unit derived from the chain dihydroxy compound and the structural unit derived from the alicyclic dihydroxy compound is preferably greater than 65 mol%, more preferably 70 mol% or greater, even more preferably 80 mol% or greater, and still more preferably 90 mol%

or greater.

For the dihydroxy compound used in the polyester resin, a dihydroxy compound (also referred to as the "additional dihydroxy compound") other than the chain dihydroxy compound and the alicyclic dihydroxy compound may be used as long as the effects of the present invention are not impaired. In the polyester resin, the content of the structural unit derived from the additional dihydroxy compound is, for example, 20 mol% or less, preferably 10 mol% or less, more preferably 5 mol% or less, and most preferably 0 mol% per 100 mol of the structural unit derived from the dihydroxy compound in the polyester resin.

Examples of the additional dihydroxy compound include p-xylenediol, 2,2-bis(4-hydroxyphenyl)propane (bisphenol A), tetrabromobisphenol A, tetrabromobisphenol A-bis(2-hydroxyethyl ether), α,α'-bis(4-hydroxyphenyl)-m-diisopropylbenzene (bisphenol M), 9,9-bis(4-hydroxy-3-methylphenyl)fluorene, 1,1-bis(4-hydroxyphenyl)cyclohexane, 1,1-bis(4-hydroxyphenyl)-3,3,5-trimethylcyclohexane, 4,4'-dihydroxy-3,3'-dimethyldiphenyl sulfide, 2,2-bis(4-hydroxy-3-methylphenyl)propane (bisphenol C), 2,2-bis(4-hydroxyphenyl)-1,1,1,3,3,3-hexafluoropropane (bisphenol AF), and 1,1-bis(4-hydroxyphenyl)decane.

Among those described above, from the viewpoints of low-temperature fusibility, heat resistance, solvent resistance, and the like, the polyester resin preferably contains a structural unit derived from ethylene glycol and a structural unit derived from cyclohexanedimethanol and also preferably contains a structural unit derived from ethylene glycol, a structural unit derived from cyclohexanedimethanol, and a structural unit derived from tetramethylcyclobutanediol.

The polyester resin is preferably an amorphous polyester. The use of the amorphous polyester is likely to provide good adhesion of a film formed from the present resin composition to other members, such as a resin film. The amorphous polyester is a substantially non-crystalline polyester. For the substantially non-crystalline (including low-crystalline) polyester, there can be used a polyester that does not show a clear crystal melting peak during temperature increase with a differential scanning calorimeter (DSC), a polyester that has crystallinity but has a low crystallization rate and is not in a high crystallinity state when formed by an extrusion film formation method or the like, and a polyester that has crystallinity but has a low amount of heat of crystal fusion (ΔHm) of 10 J/g or less as observed during temperature increase with a differential scanning calorimeter (DSC). That is, the amorphous polyester in the present invention also encompasses "a crystalline polyester in a non-crystalline state".

The present resin composition may contain a component other than the resin component, metal-based salt stabilizer, filler, and impact absorber, and may contain, for example, an additive (also referred to as an additional additive) other than these.

For the additional additive, a phosphorus-based stabilizer may be used. When the present resin composition contains a phosphorus-based stabilizer in addition to the metal-based salt stabilizer, better wet-heat resistance is provided and yellowing is also prevented. Examples of the phosphorus-based stabilizer include phosphorous acid, phosphoric acid, a phosphorous acid ester (phosphite), a trivalent phosphoric acid ester (phosphonite), and a pentavalent phosphoric acid ester (phosphate). Among these, an organic phosphite, an organic phosphonite, or an organic phosphate is preferred, and an organic phosphate is more preferred.

The organic phosphate is preferably an acid phosphate, and examples include a compound represented by the following formula.

$$(R^{11}O)_{3-n}P(=O)(OH)_n$$

where $R^{11}$ is a hydrocarbon group and may be the same as or different from each other, and n represents an integer of from 0 to 2.

$R^{11}$ is, for example, a hydrocarbon group having from 1 to 30 carbon atoms, and specific examples include an alkyl group, an aryl group, and an alkenyl group, preferably an alkyl group and an aryl group, and more preferably an alkyl group.

Examples of the organic phosphate compound include a long-chain alkyl acid phosphate compound in which $R^{11}$ has from 8 to 30 carbon atoms. Specific examples of the alkyl group having from 8 to 30 carbon atoms include an octyl group, a 2-ethylhexyl group, an isooctyl group, a nonyl group, an isononyl group, a decyl group, an isodecyl group, a dodecyl group, a tridecyl group, an isotridecyl group, a tetradecyl group, a hexadecyl group, an octadecyl group, an eicosyl group, and a triacontyl group.

Examples of the long-chain alkyl acid phosphate include octyl acid phosphate, 2-ethylhexyl acid phosphate, decyl acid phosphate, lauryl acid phosphate, octadecyl acid phosphate, behenyl acid phosphate, dioctyl acid phosphate, di-2-ethylhexyl acid phosphate, didecyl acid phosphate, dilauryl acid phosphate, and dioctadecyl acid phosphate.

In addition, examples of the acid phosphate other than the long-chain alkyl acid phosphate include phenyl acid phosphate, bisphenol A acid phosphate, dimethyl acid phosphate, diethyl acid phosphate, dipropyl acid phosphate, diisopropyl acid phosphate, dibutyl acid phosphate, cyclohexyl acid phosphate, phenoxyethyl acid phosphate, alkoxypolyethylene glycol acid phosphate, bisnonylphenyl acid phosphate, nonylphenyl acid phosphate, diphenyl acid phosphate, and oleyl acid phosphate.

One of the phosphorus-based stabilizers may be used alone, or two or more may be used in combination.

Among the above, the phosphorus-based stabilizer is preferably at least one of octadecyl acid phosphate and dioctadecyl acid phosphate, and examples of commercially available products of the phosphorus-based stabilizer include "ADEKA STAB AX-71"(trade name) available from ADEKA Corporation.

The content of the phosphorus-based stabilizer in the present resin composition is not particularly limited but is preferably 0.005 parts by mass or greater and 2 parts by mass or less, greater preferably 0.01 parts by mass or greater and 1 part by mass or less, and even greater preferably 0.02 parts by mass or greater and 0.5 parts by mass or less per 100 parts by mass of the resin component.

The additional additive may be an additive other than the phosphorus-based stabilizer, and specific examples include additives usually used in a wide range of resin materials, such as a laser color former, an antioxidant, a heat stabilizer, a process stabilizer, an ultraviolet absorber, a light stabilizer, a matting agent, a processing aid, a metal inactivating agent, a residual polymerization catalyst inactivating agent, an antibacterial/antifungal agent, an antiviral agent, an antistatic agent, a lubricant, a flame retardant, and a colorants, such as a pigment and a dye. The additional additive of these is added in an amount usually used according to the purpose of use. One of these additives may be used alone, or two or more may be used in combination.

In addition, the present resin composition containing, for example, a laser color former enables a film formed from the present resin composition to be used as a laser marking sheet that develops a color by irradiation with a laser.

The present resin composition is favorably produced, for example, by mixing raw materials constituting the present resin composition, such as the polycarbonate resin (A) and the metal salt-based stabilizer, as well as the filler, the impact absorber, the additional additive, and the resin component other than the polycarbonate resin (A), which are blended as necessary. The raw materials are favorably mixed by melt-kneading with heating in an extruder, a Plastomill, or the like. Here, the temperature during kneading is, for example, 180°C or higher and 320°C or lower, preferably 200°C or higher and 310°C or lower, and more preferably 220°C or higher and 300°C or lower.

The present resin composition is preferably used for a card or a passport. **In** addition, the present resin composition is favorably used to prevent color tone change, in particular, yellowing. **In** the present resin composition, the metal-based stabilizer is favorably used to prevent color tone change, in particular, yellowing, of the present resin composition.

The present resin composition used for a card or a passport is used in a high temperature and a high humidity for a long period of time or processed in a severe environment. However, the present resin composition has good wet-heat resistance and thus can prevent yellowing due to use in a high-temperature and high-humidity environment or processing in high-temperature and high-humidity conditions. The present resin composition is particularly preferably used for a core sheet of a card or a passport.

However, the present resin composition may be used for purposes other than for a card or a passport. In addition, the present resin composition is used in a film as described later but may also be used in others than a film.

A resin composition according to another aspect of the present invention is a resin composition containing:

a resin component containing a polycarbonate resin (A),
an inorganic filler, and
a compound (C),
in which
a metal element is detected by inductively coupled plasma atomic emission spectroscopy (ICP-AES), and an ester having an aliphatic group is detected by gas chromatography-mass spectrometry (GC-MS).

In the resin composition according to another aspect, a component insoluble in a good solvent for the polycarbonate resin (A), such as tetrahydrofuran or chloroform, is subjected to methanol decomposition or extraction with heated methanol to esterify the compound (C) contained in the resin composition, and the ester is detected. Thus, the resin composition favorably contains, as the compound (C), a carboxylic acid having an aliphatic group or its derivative, such as a carboxylic acid having an aliphatic group, an ion of the carboxylic acid, or a metal salt of the carboxylic acid.

The ester to be detected is preferably a fatty acid ester, and thus the carboxylic acid is preferably a fatty acid.

In addition, the resin composition contains a metal element, such as a metal ion, as is apparent from the fact that the metal element is detected by ICP emission spectroscopy.

As described above, the resin composition according to another aspect of the present invention contains a carboxylic acid having an aliphatic group or its derivative and a metal element, such as a metal ion. Thus, these components act as a stabilizer and can ensure the wet-heat resistance of the resin composition and can prevent yellowing.

The compound (C) is a carboxylic acid having an aliphatic group or its derivative and may be a metal salt of a carboxylic acid or the like, and among these, the fatty acid metal salt described above is preferred.

In addition, the metal element is the same as the metal species constituting the metal salt in the metal salt-based stabilizer described above, and the details are as described above. However, the metal element is preferably zinc, magnesium, calcium, aluminum, or copper, and among these, more preferably zinc, magnesium, calcium, or aluminum, and particularly even more preferably zinc. Furthermore, the carboxylic acid having an aliphatic group is preferably a fatty acid as described above, but the details of the fatty acid are as described above, and the description is omitted.

Also in another aspect, the resin composition containing an inorganic filler, such as titanium oxide, is likely to cause yellowing when used in a high-temperature and high-humidity environment. However, as described above, the resin composition can appropriately prevent yellowing by the improved wet-heat resistance owing to a carboxylic acid having an aliphatic group or its derivative and a metal element, such as a metal ion, contained therein even though an inorganic filler contained therein . The details of the filler (inorganic filler) are as described above. In addition, the resin component in the resin composition according to another aspect contains the polycarbonate resin (A), and the details are as described above.

Furthermore, the present resin composition according to another aspect also has the same configuration as that of the present resin composition described above with respect to other configurations and may appropriately contain an impact modifier and/or another additive. Other configurations are also the same as those described above, and thus the description is also omitted.

Film

A film of the present invention (hereinafter also referred to as "the present film") includes a resin layer (hereinafter also referred to as "the present resin layer") constituted of the present resin composition described above. The present film is preferably a film to be used for a card or a passport.

The present film may be a film with a single-layer structure constituted of a single layer of the present resin layer (single-layer film) or a film with a multi-layer structure including at least one layer of the present resin layer (laminated film). The number of layers of the laminated film is not particularly limited as long as the laminated film includes two or more resin layers. The laminated film may have two or more present resin layers, or all the resin layers may be constituted of the present resin composition. In the laminated film including two or more present resin layers, the compositions of the resin compositions constituting respective resin layers may be the same as or different from each other.

In the laminated film, the layer other than the present resin layer is not particularly limited as long as it is a resin layer other than the present resin layer, and the resin component constituting the resin layer other than the present resin layer may be the polycarbonate resin (A) described above, a resin component other than the polycarbonate resin (A) (additional resin component), or a combination of the polycarbonate resin (A) and the additional resin component. The additional resin component is appropriately selected from those listed above and favorably used but is preferably at least one selected from a polycarbonate resin and a polyester resin. The resin layer other than the present resin layer may be constituted of a resin composition containing, in addition to the resin component, one or two or more selected from a filler, an impact absorber, and an additional additive other than these.

The thickness of the present film is not particularly limited and is appropriately adjusted according to the purpose of use but is, for example, 5 μm or greater, preferably 10 μm or greater, more preferably 15 μm or greater, even more preferably 20 μm or greater, and still more preferably 40 μm or greater, and for example, 1000 μm or less, preferably 500 μm or less, more preferably 300 μm or less, even more preferably 250 μm or less, and still more preferably 200 μm or less. When the present film has a certain thickness or greater, the present film can exhibit an appropriate function. For example, this ensures concealability when a filler is contained. On the other hand, when the present film has a certain thickness or less, the thickness of a card and a passport can be reduced easily.

In addition, the thickness of the present resin layer in the present film is not particularly limited and is appropriately adjusted according to the purpose of use but is, for example, 5 μm or greater, preferably 10 μm or greater, more preferably 15 μm or greater, and even more preferably 20 μm or greater. Furthermore, the thickness of the present resin layer in the present film is, for example, 800 μm or less, preferably 400 μm or less, more preferably 300 μm or less, even more preferably 200 μm or less, and still more preferably 150 μm or less. When the present resin layer has a certain thickness or greater, an appropriate function can be exhibited. For example, The present resin layer having a certain thickness or greater can readily exhibit good concealability in such a case where a filler is contained. On the other hand, when the present resin layer has a certain thickness or less, the thickness of a card and a passport can be reduced. In the case of providing two or more present resin layers in the film, the thickness of the present resin layer is their total thickness.

The present film preferably has a small color difference ΔE between before and after wet-heat treatment carried out under conditions of 60°C and 90% RH for 7 days. ΔE is preferably 2.5 or less, preferably 2.3 or less, more preferably 2 or less, even more preferably 1.8 or less, still more preferably 1.5 or less, yet more preferably 1.2 or less, and still even more preferably 1 or less.

In addition, the present film preferably has a small difference Δb* (absolute value) between b* before and b* after wet-heat treatment carried out under conditions of 60°C and 90% RH for 7 days. Δb* (absolute value) is preferably 2.5 or

less, preferably 2.3 or less, more preferably 2 or less, even more preferably 1.8 or less, still more preferably 1.5 or less, yet more preferably 1.2 or less, still even more preferably 1 or less, and yet even more preferably 0.6 or less. The detailed measurement conditions are favorably performed as described in Examples.

Method of Producing Film

The present film can be produced by a known method but is favorably produced in such manner that the present resin composition for forming the present film is produced and then the present resin composition is formed into a film as described above. The method of forming the present resin composition into a film is not particularly limited and may be press molding or extrusion molding but is preferably extrusion molding in terms of productivity and cost. The present film formed by extrusion molding would be likely to cause yellowing when used in a high-temperature and high-humidity environment. However, according to the present invention, yellowing can be effectively prevented, and thus even though the present film is molded by extrusion molding, yellowing can be effectively prevented from occurring when the present film is used.

In addition, in the case where the present film is a laminated film, the present film may be formed by preparing resin compositions each for forming each layer and laminating a plurality of resin layers by a known lamination method while each resin layer is formed from each resin composition. Alternatively, a composition for forming another resin layer may be melt-extruded and laminated on a resin layer formed from any resin composition. Furthermore, a multilayer structure may be formed by co-extrusion. A co-extrusion method is preferably employed from the viewpoint of productivity, cost, and the like.

In the laminated film, the resin composition for forming each layer is favorably produced by mixing components for forming each layer according to the composition of each layer, but at least one of the resin compositions is the present resin composition described above.

The present resin composition is also preferably formed into a molded article having a shape other than a film shape. For example, the present resin composition can be formed into a molded article having a shape of various types, such as a plate shape, a fiber shape, a rod shape, a bottle shape, and a tube shape, or formed into a molded article having a shape of various types by injection molding or the like.

Card or Passport

The present resin composition and the present film are preferably used for a card or a passport. The present resin composition and the present film can be used for various cards, such as an IC card, a magnetic card, a driver's license, a residence card, a qualification certificate, an employee identification card, a student identification card, an insurance card, an individual number card, a seal registration certificate, a vehicle inspection certificate, a tag card, a prepaid card, a cash card, a bank card, a credit card, a subscriber identity module (SIM) card, an electronic toll collection (ETC) card, an identification card, an information-bearing card, a smart card, a BS-Conditional Access Systems (B-CAS) card, and a memory card. The present film or resin composition is favorably used for a data page in a passport.

The card or passport (more specifically, the data page of the passport) of the present invention favorably includes the present film or the present resin composition described above. The card or passport is usually composed of a plurality of resin films, but at least one of them is preferably the present film.

The card or passport favorably includes a core sheet. In addition, the card or passport favorably includes, in addition to the core sheet, at least one of a laser marking sheet or an oversheet.

The passport or card is favorably produced by overlaying a plurality of resin films, for example, one or more sheets selected from a core sheet and a sheet other than the core sheet, pressing, heat-fusing, and then punching and/or the like. Furthermore, the sheets may be adhered to each other by appropriately using an adhesive or the like instead of heat fusion.

The card is, for example, preferably a card 20A including a laser marking sheet 1 and a core sheet 2, with the laser marking sheet 1 being provided on one or both surfaces of the core sheet 2 as illustrated in FIG. 1 (a). In addition, the card is also preferably a card 20B further including an oversheet 4, with the oversheet 4 as a protective layer being further laminated on the outside of a laser marking sheet 1 as illustrated in FIG. 1 (b). Furthermore, the laser marking sheet may be omitted, and the card may be, for example, a card 20C including a core sheet 2 and an oversheet 4 as a protective layer on one or both surfaces of the core sheet 2 as illustrated in FIG. 1 (c).

Although FIG. 1 illustrates embodiments in which the laser marking sheet 1, the oversheet 4, or both of these are provided on both surface sides of the core sheet 2, the laser marking sheet 1, the oversheet 4, or both of these may be provided on only one surface side of the core sheet 2.

Moreover, in the cards 20A to 20C, both surfaces of the core sheet 2 have the same layer structure, respectively, but the surfaces may have a different layer structure from each other. For example, the laser marking sheet 1 and the oversheet 4 may be provided in this order on one surface of the core sheet 2, and only the oversheet 4 may be provided on the other surface of the core sheet 2.

The passport favorably includes a hinge sheet particularly in the case of an electronic passport. For example, the passport is preferably a passport 10A including a hinge sheet 3 and core sheets 2 each provided on each of both surfaces of the hinge sheet 3, with a laser marking sheet 1 being laminated on the outside of one or both of the core sheets 2 as illustrated in FIG. 2 (a). In addition, the passport is also preferably a passport 10B including an oversheet 4, with the oversheet 4 as a protective layer being further laminated on the outside of a laser marking sheet 1 as illustrated in FIG. 2 (b). Furthermore, the laser marking sheet may be omitted, and the passport may be a passport 10C including a hinge sheet 3, core sheets 2 each provided on each of both surfaces of the hinge sheet 3, and an oversheet 4 as a protective layer on the outside of one or both of the core sheets 2 as illustrated in FIG. 2 (c).

Although FIG. 2 illustrates embodiments in which the laser marking sheet 1, the oversheet 4, or both of these are provided on both outsides of the core sheets 2, the laser marking sheet 1, the oversheet 4, or both of these may be provided on only one of the outsides of the core sheets 2.

In addition, in the passports 10A to 10C, both of the core sheets 2 have the same layer structure on the outside, respectively, but the core sheets 2 may have a different layer structure from each other on the outside. For example, the laser marking sheet 1 and the oversheet 4 may be provided in this order on the outside of one of the core sheets 2, and only the oversheet 4 may be provided on the outside of the other of the core sheets 2.

In addition, FIGS. 2 (a) to 2 (c) illustrate embodiments of a passport in which the core sheets 2, 2 are disposed so as to sandwich the hinge sheet 3. However, the present invention is not particularly limited to these embodiments; the core sheets need not be disposed so as to sandwich the hinge sheet, and one core sheet may be disposed. Furthermore, the core sheet may be formed by laminating a plurality of core sheets without sandwiching the hinge sheet. Moreover, the hinge sheet 3 need not be in contact with the core sheet and may be disposed at any position not in contact with the core sheet.

The hinge sheet may be disposed, for example, but not limited to, between the core sheet and the oversheet, between the core sheet and the laser marking sheet, or between the laser marking sheet and the oversheet, instead of between the core sheets.

In the card or passport, the core sheet is preferably a resin film obtained using a polycarbonate resin, a polyester resin, a mixture of these, or the like as a resin component, and preferably contains a filler. The core sheet may be formed by laminating a plurality of core sheets. The thickness of each core sheet is favorably from about 50 to 700 μm.

Each core sheet may be a print sheet or the like on which fixed information is to be printed, or may be an inlet sheet or the like in which a hollow portion for incorporating an inlet, such as an IC chip or an antenna, is provided. In addition, each core sheet may be a concealing sheet for concealing an inlet or the like.

Furthermore, an adhesive sheet or the like may be appropriately disposed between a pair of adjacent core sheets, and the pair of adjacent core sheets may be adhered to each other with the adhesive sheet. Moreover, each core sheet may be composed of a single-layer film or may be composed of a laminated film having two or more resin layers. The adhesive sheet may be provided between the core sheet and the oversheet or between the core sheet and the laser marking sheet.

The laser marking sheet is preferably a resin film in which a polycarbonate resin, a polyester resin, a mixture of these, or the like is used as a resin component. The laser marking sheet is a sheet on which personal information and/or the like is printed by laser printing. The personal information is information to identify an individual as an owner of a passport or a card and includes a personal name, a personal identification, and a card number.

The laser marking sheet is favorably formed of a resin film, and the resin film may be a single-layer film or a laminated film having two or more resin layers. The laser marking sheet preferably includes a resin layer containing a laser color former, and in the case of a single-layer film, the single-layer resin layer favorably contains a laser color former. In addition, in the case of a laminated film, the laser marking sheet may have, for example, a structure in which surface layers are provided on both surfaces of an intermediate layer, and a laser color former is favorably contained in the intermediate layer. The laser marking sheet is typically a transparent film. The thickness of the laser marking sheet is not particularly limited but is, for example, from about 5 to 400 μm and preferably from 10 to 300 μm.

The oversheet usually constitutes the outermost layer in a card or a data page of a passport and protects the card or the passport. The oversheet in the case of being disposed on the outside of the laser marking sheet as illustrated in FIGS. 1 (b) and 2 (b) can prevent, for example, what is called "swelling", which is foaming of the laser-printed portion due to the laser light irradiation. The resin used for the oversheet is not particularly limited, but examples include a polycarbonate-based resin, a polyester resin, and a mixture of these. The thickness of the oversheet is not particularly limited but is, for example, from about 5 to 400 μm and preferably from 10 to 300 μm.

The hinge sheet in a passport is a sheet that plays a role to firmly bind data pages together with the cover of the passport, another visa sheet, and/or the like. For the hinge sheet, a known sheet can be used. The hinge sheet may be a resin sheet composed of a thermoplastic resin or a thermoplastic elastomer, such as a thermoplastic polyester resin, a thermoplastic polyester elastomer, a thermoplastic polyamide resin, a thermoplastic polyamide elastomer, a thermoplastic polyurethane resin, or a thermoplastic polyurethane elastomer. The hinge sheet may be composed of a woven fabric, a knitted fabric, or a nonwoven fabric, or may be a composite material of a woven fabric, a knitted fabric, or a

nonwoven fabric and a thermoplastic resin, a thermoplastic elastomer, and/or the like.

In the card or passport, the resin film used in each of the core sheet, the laser marking sheet, and the oversheet may be composed of the present film as described above, but a resin film other than the present film may be used as long as the card or passport includes at least one present film. Here, for the card or passport, the present film is preferably used for at least the core sheet.

In addition, in the case where the core sheet is composed of a plurality of core sheets, at least one of the plurality of core sheets may be composed of the present film, or all of the core sheets may be composed of the present film. Also in the case where a plurality of laser marking sheets and a plurality of oversheets are provided, at least one of the plurality of sheets may be composed of the present film, or all of the sheets may be composed of the present film.

## Examples

Hereinafter, examples and comparative examples will be shown, but the present invention is not limited by these.

The method of measuring the glass transition temperature of a resin was as follows.

### Glass Transition Temperature

The glass transition temperature was measured when the temperature was increased from 30°C to 200°C at a rate of 20°C/min, reduced to 30°C at a rate of 20°C/min, and increased again to 200°C at a rate of 20°C/min using a differential scanning calorimeter "Pyris 1 DSC" (available from PerkinElmer Inc.) in accordance with JIS K7121: 2012. The glass transition temperature was determined by the midpoint glass transition temperature (Tmg).

A method for evaluating films produced in examples and comparative examples were as follows.

### ΔE, Δb*

The wet-heat treatment was carried out under conditions of 60°C and 90% RH for 7 days with a thermo-hygrostat "LHL-113" available from Espec Corp. The chromaticities (L*a*b* color system) of the films before and after the wet-heat treatment were measured with a spectrocolorimeter "CM-2500d" available from Konica Minolta, Inc., and the color difference ΔE between before and after the wet-heat treatment was evaluated. A smaller value of the color difference ΔE indicates a smaller color change between before and after the treatment. In addition, a value determined by subtracting b* before the wet-heat treatment from b* after the wet-heat treatment was evaluated as Δb*. Δb* is a measure indicating a color change between blue and yellow, and a smaller numerical value indicates a smaller color change. Furthermore, a positive value of Δb* indicates that the color has changed toward yellow, and a negative value of Δb* indicates that the color has changed toward blue.

Raw materials used in examples and comparative examples are as follows.

### Resin

ISP: a polycarbonate resin produced by a melt polymerization method using isosorbide and 1,4-cyclohexanedimethanol as dihydroxy compounds in such manner that a ratio of a structural unit derived from isosorbide to a structural unit derived from 1,4-cyclohexanedimethanol is 50:50 (mol%). Glass transition temperature: 98°C

### Metal Salt-Based Stabilizer

Metal salt 1: "ZS-St" available from Nitto Chemical Industry Co., Ltd., zinc stearate
Metal salt 2: "ZS-3" available from Nitto Chemical Industry Co., Ltd., zinc laurate
Metal salt 3: "ZS-6" available from Nitto Chemical Industry Co., Ltd., zinc 12-hydroxystearate
Metal salt 4: "MS-6" available from Nitto Chemical Industry Co., Ltd., magnesium 12-hydroxystearate
Metal salt 5: "CS-6" available from Nitto Chemical Industry Co., Ltd., calcium 12-hydroxystearate
Metal salt 6: "Al-St" available from Nitto Chemical Industry Co., Ltd., aluminum stearate
Metal salt 7: "Powder Base L" available from NOF Corporation, zinc laurate
Metal salt 8: zinc laurate (boron nitride-containing product) available from NOF Corporation, average particle size of 3 μm (number average value of longest diameters of particles in an SEM image)
Metal salt 9: "ZS-7" available from Nitto Chemical Industry Co., Ltd., zinc behenate
Metal salt 10: "ZS-8" available from Nitto Chemical Industry Co., Ltd., zinc montanate

Metal salt 11: "Z-08N" available from Nitto Chemical Industry Co., Ltd., zinc caprylate Filler
Filler: titanium oxide (rutile type, refractive index of 2.7)

Impact Modifier

Impact modifier 1: core-shell type elastomer, "Metablen S-2001" available from Mitsubishi Chemical Corporation
Impact modifier 2: core-shell type elastomer, "Metablen E-870A" available from Mitsubishi Chemical Corporation
Impact modifier3: core-shell type elastomer, "Metablen S-2006" available from Mitsubishi Chemical Corporation
Impact modifier 4: core-shell type elastomer "Metablen W-377" available from Mitsubishi Chemical Corporation

Additional Additive

Antioxidant 1: "ADEKA STAB PEP-36" available from ADEKA Corporation, 3,9-bis(2,6-di-tert-butyl-4-methylphenoxy)-2,4,8,10-tetraoxa-3,9-diphosphaspiro[5,5]undecane
Antioxidant 2: "JP-650" available from Johoku Chemical Co., Ltd., tris(2,4-di-t-butylphenyl) phosphite
Antioxidant 3: "JC-356" available from Johoku Chemical Co., Ltd., diethyl 3,5-di-tert-butyl-4-hydroxybenzylphosphonate
HALS (light stabilizer): "ADEKA STAB LA-52" available from ADEKA Corporation, tetrakis(1,2,2,6,6-pentamethyl-4-piperidinyl) butane-1,2,3,4-tetracarboxylate
Stabilizer: "ADEKA STAB AX-71" available from ADEKA Corporation, long-chain alkyl acid phosphate
Zinc oxide: "Zinc Oxide" available from FUJIFILM Wako Pure Chemical Corporation

Examples 1 to 4, Comparative Examples 1 to 5, and Reference Example 1

Raw materials were placed in a Labo Plastomill "4C150" available from Toyo Seiki Seisaku-sho, Ltd. in given proportions as described in Table 1 and melt-kneaded at 250°C and 60 rpm for 5 minutes in a nitrogen gas atmosphere, resulting in the formation of a resin composition. The resulting resin composition was press-molded at 260°C using a heat press "IMC-18DA" available from Imoto Machinery Co., Ltd., and a film with a thickness of about 300 μm was prepared, and the resulting film was evaluated. The evaluation results are shown in Table 1.

Examples 5 to 26 and Comparative Examples 6 to 10

Raw materials were placed in a co-rotating twin-screw extruder (φ 25 mm) in given proportions as described in Table 2, melt-kneaded under conditions of 240°C and 120 rpm, resulting in the formation of a resin composition. The resin composition was extruded with the take-up rate adjusted to have the thickness of 100 μm, and a film was prepared. The resulting film was evaluated. The evaluation results are shown in Tables 2 to 4.

[Table 1]

| | Component | Example 1 | Example 2 | Example 3 | Example 4 | Comparative Example 1 | Comparative Example 2 | Comparative Example 3 | Comparative Example 4 | Comparative Example 5 | Reference Example |
|---|---|---|---|---|---|---|---|---|---|---|---|
| Formulation (parts by mass) | ISP | 100 | 100 | 100 | 100 | 100 | 100 | 100 | 100 | 100 | 100 |
| | Metal salt 1 | | | | | | | | | | |
| | Metal salt 2 | | | | | | | | | | |
| | Metal salt 3 | 0.57 | | | | | | | | | |
| | Metal salt 4 | | | 0.57 | | | | | | | |
| | Metal salt 5 | | | | 0.57 | | | | | | |
| | Metal salt 6 | | 0.57 | | | | | | | | |
| | Filler ($TiO_2$) | 13.6 | 13.6 | 13.6 | 13.6 | 13.6 | 13.6 | 13.6 | 13.6 | 13.6 | |
| | Impact modifier 1 | | | | | | | | | | |
| | Impact modifier 2 | | | | | | | | | | |
| | Antioxidant 1 | | | | | | 0.17 | | | | |
| | Antioxidant 2 | | | | | | | 0.17 | | | |
| | Antioxidant 3 | | | | | | | | 0.17 | | |
| | HALS (light stabilizer) | | | | | | | | | 0.57 | |
| Titanium oxide/metal salt-based stabilizer | | 24 | 24 | 24 | 24 | - | - | - | - | - | - |
| Content (mass%) of metal salt-based stabilizer in resin composition | | 0.50 | 0.50 | 0.50 | 0.50 | - | - | - | - | - | - |
| Evaluation | ΔE | 0.60 | 0.80 | 0.97 | 0.73 | 1.13 | 1.21 | 1.12 | 1.11 | 1.48 | 0.06 |
| | Δb* | -0.16 | 0.77 | -0.49 | -0.66 | 0.94 | 1.18 | 1.09 | 1.10 | 1.47 | -0.06 |

[Table 2]

| | Component | Example 5 | Example 6 | Example 7 | Example 8 | Example 9 | Comparative Example 6 | Example 10 | Comparative Example 7 |
|---|---|---|---|---|---|---|---|---|---|
| Formulation (parts by mass) | ISP | 100 | 100 | 100 | 100 | 100 | 100 | 100 | 100 |
| | Metal salt 1 | 0.63 | | | | | | | |
| | Metal salt 2 | | 0.63 | | | | | | |
| | Metal salt 3 | | | 0.31 | 0.63 | 1.25 | | 0.63 | |
| | Metal salt 4 | | | | | | | | |
| | Metal salt 5 | | | | | | | | |
| | Metal salt 6 | | | | | | | | |
| | Filler ($TiO_2$) | 15 | 15 | 15 | 15 | 15 | 15 | 15 | 15 |
| | Impact modifier 1 | 10 | 10 | 10 | 10 | 10 | 10 | | |
| | Impact modifier 2 | | | | | | | 10 | 10 |
| | Antioxidant 1 | | | | | | | | |
| | Antioxidant 2 | | | | | | | | |
| | Antioxidant 3 | | | | | | | | |
| | HALS (light stabilizer) | | | | | | | | |
| Titanium oxide/metal salt-based stabilizer | | 24 | 24 | 48 | 24 | 12 | - | 24 | - |
| Content (mass%) of metal salt-based stabilizer in resin composition | | 0.50 | 0.50 | 0.25 | 0.50 | 0.99 | - | 0.50 | - |
| Evaluation | ΔE | 1.69 | 1.23 | 2.21 | 1.37 | 0.73 | 2.60 | 0.52 | 1.39 |
| | Δb* | 1.66 | 1.22 | 2.18 | 1.34 | 0.52 | 2.51 | 0.52 | 1.30 |

[Table 3]

| | Component | Example 11 | Example 12 | Example 13 | Example 14 | Example 15 | Example 16 | Example 17 | Example 18 | Example 19 | Example 20 | Example 21 | Comparative Example 8 | Comparative Example 9 | Comparative Example 10 |
|---|---|---|---|---|---|---|---|---|---|---|---|---|---|---|---|
| Formulation (parts by mass) | ISP | 100 | 100 | 100 | 100 | 100 | 100 | 100 | 100 | 100 | 100 | 100 | 100 | 100 | 100 |
| | Metal salt 1 | | | | | | | | | | | | | | |
| | Metal salt 2 | | 0.57 | | | | | | | | | | | | |
| | Metal salt 3 | 0.57 | | | | 0.57 | 1.14 | | | | 0.85 | 0.85 | | | |
| | Metal salt 4 | | | | | | | | | | 0.28 | | | | |
| | Metal salt 5 | | | | | | | | | | | 0.28 | | | |
| | Metal salt 6 | | | | | | | | | | | | | | |
| | Metal salt 7 | | | 0.57 | | | | | | | | | | | |
| | Metal salt 8 | | | | 0.57 | | | | | | | | | | |
| | Metal salt 9 | | | | | | | 0.57 | | | | | | | |
| | Metal salt 10 | | | | | | | | 0.57 | | | | | | |
| | Metal salt 11 | | | | | | | | | 0.57 | | | | | |
| | Filler ($TiO_2$) | 13.6 | 13.6 | 13.6 | 13.6 | 13.6 | 13.6 | 13.6 | 13.6 | 13.6 | 13.6 | 13.6 | 13.6 | 13.6 | 13.6 |
| | Impact modifier 1 | | | | | | | | | | | | | | |
| | Impact modifier 2 | | | | | | | | | | | | | | |
| | Impact modifier 3 | | | | | | | | | | | | | | |
| | Impact modifier 4 | | | | | | | | | | | | | | |
| | Stabilizer | | | | | 0.038 | 0.076 | | | | 0.057 | 0.057 | | | 0.23 |
| | Zinc oxide | | | | | | | | | | | | | 0.57 | |
| Titanium oxide/metal salt-based stabilizer | | 24 | 24 | 24 | 24 | 24 | 12 | 24 | 24 | 24 | 12 | 12 | - | - | - |
| Content (mass%) of metal salt-based stabilizer in resin composition | | 0.50 | 0.50 | 0.50 | 0.50 | 0.50 | 0.99 | 0.50 | 0.50 | 0.50 | 0.99 | 0.99 | - | - | - |

(continued)

| | Component | Example 11 | Example 12 | Example 13 | Example 14 | Example 15 | Example 16 | Example 17 | Example 18 | Example 19 | Example 20 | Example 21 | Comparative Example 8 | Comparative Example 9 | Comparative Example 10 |
|---|---|---|---|---|---|---|---|---|---|---|---|---|---|---|---|
| Evaluation | | 0.16 | 0.22 | 0.16 | 0.16 | 0.02 | 0.57 | 0.11 | 0.17 | 0.59 | 0.19 | 0.10 | 1.88 | 1.48 | 2.16 |
| | Δb* | 0.15 | 0.21 | 0.14 | 0.15 | 0.01 | 0.00 | 0.1 | 0.13 | 0.07 | 0.01 | 0.08 | 1.83 | 1.46 | 2.12 |

[Table 4]

| | Component | Example 22 | Example 23 | Example 24 | Example 25 | Example 26 |
|---|---|---|---|---|---|---|
| Formulation (parts by mass) | ISP | 100 | 100 | 100 | 100 | 100 |
| | Metal salt 1 | | | | | |
| | Metal salt 2 | | | | | |
| | Metal salt 3 | 0.63 | 0.63 | 0.63 | 0.63 | 0.63 |
| | Metal salt 4 | | | | | |
| | Metal salt 5 | | | | | |
| | Metal salt 6 | | | | | |
| | Metal salt 7 | | | | | |
| | Metal salt 8 | | | | | |
| | Metal salt 9 | | | | | |
| | Metal salt 10 | | | | | |
| | Metal salt 11 | | | | | |
| | Filler ($TiO_2$) | 15 | 15 | 15 | 15 | 15 |
| | Impact modifier 1 | | | 10 | | |
| | Impact modifier 2 | | | | 10 | |
| | Impact modifier 3 | 10 | | | | |
| | Impact modifier 4 | | 10 | | | 10 |
| | Stabilizer | | | 0.042 | 0.042 | 0.042 |
| | Zinc oxide | | | | | |
| Titanium oxide/metal salt-based stabilizer | | 24 | 24 | 24 | 24 | 24 |
| Content (mass%) of metal salt-based stabilizer in resin composition | | 0.50 | 0.50 | 0.50 | 0.50 | 0.50 |
| Evaluation | ΔE | 0.87 | 0.26 | 2.01 | 0.78 | 0.32 |
| | Δb* | 0.85 | 0.25 | 1.95 | 0.78 | 0.31 |

As shown in Examples 1 to 4 in Table 1 above, in the resin compositions containing the polycarbonate resin (A) having the structural unit (A1) derived from a specific dihydroxy compound, the metal salt-based stabilizer contained therein improved wet-heat resistance, reduced values of both ΔE and Δb*, and made the resin compositions less likely to cause yellowing as compared with the resin composition of Comparative Example 1, which contained no metal salt-based stabilizer, even though the resin compositions were allowed to stand in a high-temperature and high-humidity environment for a long period of time. On the other hand, Comparative Examples 2 to 5, in which an antioxidant or a light stabilizer used as a stabilizer in polycarbonate resins in the art was used instead of the metal salt-based stabilizer, did not show a tendency for the values of ΔE and Δb* to decrease as compared with Comparative Example 1. Thus, it was found difficult to achieve the effect of reducing yellowing even though a common stabilizer is used in the resin composition containing the polycarbonate resin (A).

In addition, as shown in Reference Example, in the resin composition containing no inorganic filler, the values of ΔE and Δb* were small, and yellowing did not occur. Thus, from the results of Reference Example and Comparative Example 1, it can be understood that the resin composition containing the polycarbonate resin (A) is likely to cause a problem of occurrence of yellowing by containing an inorganic filler.

In addition, the comparison between Comparative Examples 8, 9, and 10, and Comparative Example 1 showed that extrusion molding was relatively likely to cause yellowing. However, even though a molding method, which is likely to cause such yellowing, was employed, the resin compositions were able to prevent yellowing by the metal salt-based stabilizer contained therein as shown in Examples 5 to 21.

Furthermore, as is evident from the comparison between Comparative Example 6 and Comparative Examples 1,

8, 9, and 10, the impact modifier contained in the resin composition containing the polycarbonate resin (A) made the resin composition more likely to cause yellowing when the resin composition was allowed to stand in a high-humidity and high-temperature environment for a long period of time. According to the present invention, as shown in Examples 5 to 9, also in resin compositions containing the impact modifier, which are likely to cause yellowing, the metal salt-based stabilizer contained therein improved the wet-heat resistance, reduced values of both ΔE and Δb*, and was able to prevent yellowing as compared with the resin composition of Comparative Example 6, which contained no metal salt-based stabilizer, even though the resin compositions were allowed to stand in a high-temperature and high-humidity environment for a long period of time. The same was true for Example 10 and Comparative Example 7, in which a different type of impact modifier from that of Comparative Example 6 and Examples 5 to 9 was used. Furthermore, in the resin compositions in Examples 22 to 26, which contained both the inorganic filler and the impact modifier, the metal salt-based stabilizer contained therein reduced values of both ΔE and Δb* and was able to prevent yellowing as compared with the resin composition of Comparative Example 6.

Reference Signs List

1 Laser marking sheet
2 Core sheet
3 Hinge sheet
4 Oversheet
20A, 20B, 20C Card
10A, 10B, 10C Passport

## Claims

1. A resin composition comprising:

a resin component comprising polycarbonate resin (A) having a structural unit (A1) derived from a dihydroxy compound, the dihydroxy compound having, as a part of the structure thereof, a moiety represented by Formula (1),

[Chem. 1]

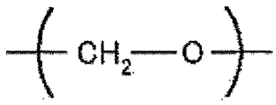

(1);

an inorganic filler; and
a metal salt-based stabilizer,

with the proviso that a case where the moiety represented by Formula (1) is a part of - $CH_2$-O-H is excluded.

2. The resin composition according to claim 1, wherein the metal salt-based stabilizer comprises at least one selected from the group consisting of a zinc salt, a magnesium salt, a calcium salt, an aluminum salt, and a copper salt.

3. The resin composition according to claim 1, wherein the metal salt-based stabilizer comprises a zinc salt.

4. The resin composition according to any one of claims 1 to 3, wherein the metal salt-based stabilizer comprises a fatty acid metal salt.

5. The resin composition according to claim 4, wherein a fatty acid in the fatty acid metal salt has 4 to 30 carbon atoms.

6. The resin composition according to claim 4, wherein a fatty acid in the fatty acid metal salt comprises a hydroxy fatty acid.

**7.** The resin composition according to any one of claims 1 to 3, wherein the inorganic filler comprises a metal oxide.

**8.** The resin composition according to any one of claims 1 to 3, wherein the inorganic filler comprises titanium oxide.

**9.** The resin composition according to any one of claims 1 to 3, wherein the resin composition comprises the metal salt-based stabilizer at a content of 0.01 parts by mass or greater and 3 parts by mass or less per 100 parts by mass of the resin component.

**10.** The resin composition according to any one of claims 1 to 3, wherein a content ratio of the inorganic filler to the metal salt-based stabilizer represented by inorganic filler/metal salt-based stabilizer is 1 or greater and 1200 or less on a mass basis.

**11.** A resin composition comprising:

a resin component comprising a polycarbonate resin (A) having a structural unit (A1) derived from a dihydroxy compound, the dihydroxy compound having, as a part of the structure thereof, a moiety represented by Formula (1),

[Chem. 2]

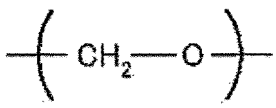

(1);

an inorganic filler; and
a compound (C),
wherein
a metal element is detected by inductively coupled plasma atomic emission spectroscopy (ICP-AES), and
an ester having an aliphatic group is detected by gas chromatography-mass spectrometry (GC-MS),

with the proviso that a case where the moiety represented by Formula (1) is a part of - $CH_2$-O-H is excluded.

**12.** The resin composition according to claim 11, wherein the ester having an aliphatic group comprises a fatty acid ester.

**13.** The resin composition according to claim 1 or 11, wherein the resin composition comprises the inorganic filler at a content of 5 parts by mass or greater and 90 parts by mass or less per 100 parts by mass of the resin component.

**14.** The resin composition according to claim 1 or 11, further comprising an impact modifier.

**15.** The resin composition according to claim 14, wherein the resin composition comprises the impact modifier at a content of 1 part by mass or greater and 30 parts by mass or less per 100 parts by mass of the resin component.

**16.** The resin composition according to claim 1 or 11, wherein the polycarbonate resin (A) comprises the structural unit (A1) at a content of 30 mol% or greater in a structural unit derived from a dihydroxy compound.

**17.** The resin composition according to claim 1 or 11, wherein the polycarbonate resin (A) comprises the structural unit (A1) at a content of 80 mol% or less in a structural unit derived from the dihydroxy compound.

**18.** The resin composition according to claim 1 or 11, wherein the polycarbonate resin (A) further comprises a structural unit (A2), the structural unit (A2) being derived from at least one dihydroxy compound selected from the group consisting of an aliphatic dihydroxy compound and an alicyclic dihydroxy compound, and the structural unit (A2) being a structural unit other than the structural unit (A1).

**19.** The resin composition according to claim 1 or 11, wherein the resin composition is for a card or a passport.

**20.** The resin composition according to claim 19, wherein the resin composition is used for a core sheet of the card or the passport.

**21.** A film comprising a resin layer constituted of the resin composition described in claim 1 or 11.

**22.** A card comprising the resin composition described in claim 1 or 11.

**23.** A passport comprising the resin composition described in claim 1 or 11.

**24.** Use of the resin composition described in claim 1 or 11 to prevent color tone change.

**25.** A method of preventing color tone change using the resin composition described in claim 1 or 11.

**26.** Use of a metal salt-based stabilizer to prevent color tone change of a resin composition,

the resin composition comprising

a resin component comprising a polycarbonate resin (A) having a structural unit (A1) derived from a dihydroxy compound, the dihydroxy compound having, as a part of the structure thereof, a moiety represented by Formula (1),

[Chem. 3]

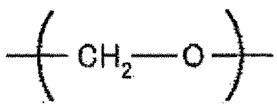

(1);

and
an inorganic filler,

with the proviso that a case where the moiety represented by Formula (1) is a part of - $CH_2$-O-H is excluded.

**27.** A film for a card or a passport,

the film comprising

a resin component comprising a polycarbonate resin (A) having a structural unit (A1) derived from a dihydroxy compound, the dihydroxy compound having, as a part of the structure thereof, a moiety represented by Formula (1),

[Chem. 4]

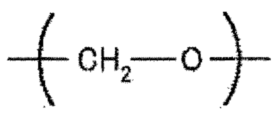

(1);

titanium oxide; and
a metal salt-based stabilizer,

wherein

a content of the titanium oxide is 5 parts by mass or greater and 90 parts by mass or less per 100 parts by mass of the resin component,
with the proviso that a case where the moiety represented by Formula (1) is a part of -$CH_2$-O-H is excluded.

**28.** A card comprising a film,
wherein

the film comprises

a resin component comprising a polycarbonate resin (A) having a structural unit (A1) derived from a dihydroxy compound, the dihydroxy compound having, as a part of the structure thereof, a moiety represented by Formula (1),

[Chem. 5]

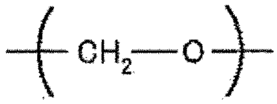

(1);

titanium oxide; and
a metal salt-based stabilizer, and

a content of the titanium oxide is 5 parts by mass or greater and 90 parts by mass or less per 100 parts by mass of the resin component,

with the proviso that a case where the moiety represented by Formula (1) is a part of - $CH_2$-O-H is excluded.

**29.** A passport comprising a film, wherein

the film comprises

a resin component comprising a polycarbonate resin (A) having a structural unit (A1) derived from a dihydroxy compound, the dihydroxy compound having, as a part of the structure thereof, a moiety represented by Formula (1),

[Chem. 6]

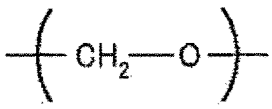

(1);

titanium oxide; and
a metal salt-based stabilizer, and

a content of the titanium oxide is 5 parts by mass or greater and 90 parts by mass or less per 100 parts by mass of the resin component,

with the proviso that a case where the moiety represented by Formula (1) is a part of - $CH_2$-O-H is excluded.

Fig. 1

(a)

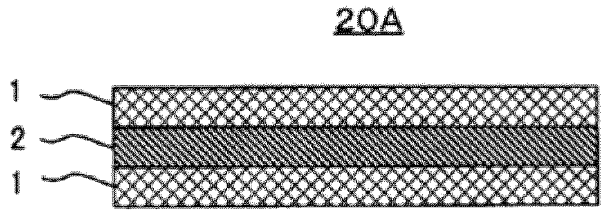


(b)

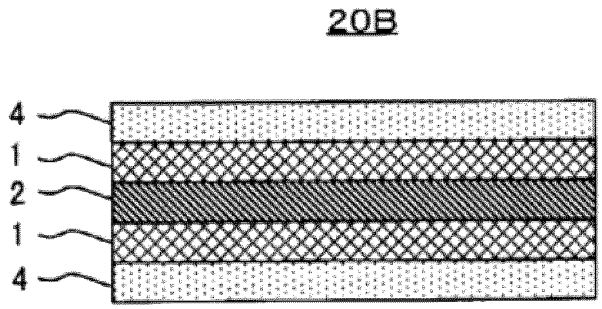


(c)

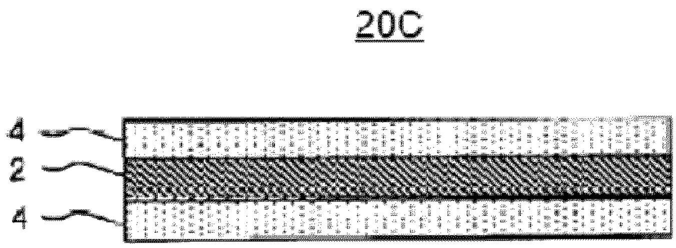

Fig. 2

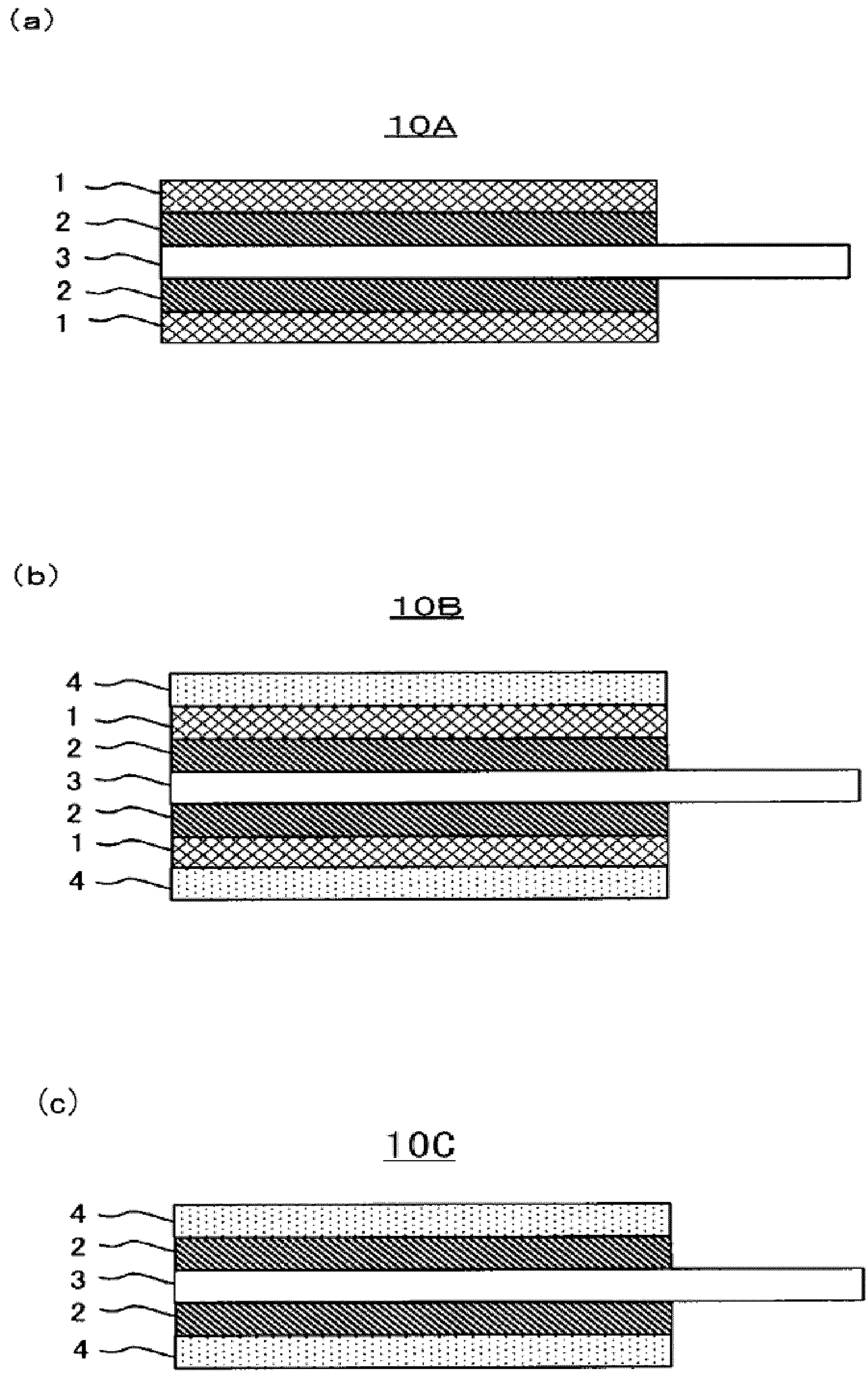

## INTERNATIONAL SEARCH REPORT

International application No. **PCT/JP2023/018171**

### A. CLASSIFICATION OF SUBJECT MATTER

***C08L 69/00***(2006.01)i; ***C08G 64/00***(2006.01)i; ***C08K 5/098***(2006.01)i
FI: C08L69/00; C08G64/00; C08K5/098

According to International Patent Classification (IPC) or to both national classification and IPC

### B. FIELDS SEARCHED

Minimum documentation searched (classification system followed by classification symbols)

C08L69/00; C08G64/00; C08K5/098

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X | JP 2016-113563 A (MITSUBISHI CHEMICALS CORP.) 23 June 2016 (2016-06-23) claims, paragraphs [0086]-[0088], [0093], [0096], [0157], examples 1, 2 | 1-3, 7-11, 13-18, 21, 24-26 |
| Y | claims, paragraphs [0086]-[0088], [0093], [0096], [0157], examples 1, 2 | 19-20, 22-23, 27-29 |
| A | entire text | 4-6, 12 |
| X | JP 2019-172879 A (MITSUBISHI CHEMICAL HOLDINGS CORP.) 10 October 2019 (2019-10-10) claims, paragraphs [0112], [0113], [0143], [0158], examples 1, 2 | 1-2, 4-5, 7-29 |
| A | entire text | 3, 6 |
| Y | JP 2013-194086 A (FUJI XEROX CO., LTD.) 30 September 2013 (2013-09-30) claims, paragraphs [0002], [0022], [0034], [0046], examples | 1-29 |
| Y | JP 2014-51558 A (MITSUBISHI CHEMICALS CORP.) 20 March 2014 (2014-03-20) claims, paragraph [0071] | 1-29 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 June 2023** | **04 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2023/018171**

**C. DOCUMENTS CONSIDERED TO BE RELEVANT**

| Category* | Citation of document, with indication, where appropriate, of the relevant passages | Relevant to claim No. |
|---|---|---|
| Y | JP 2022-34100 A (MITSUBISHI GAS CHEMICAL CO., INC.) 03 March 2022 (2022-03-03) claims, paragraph [0039] | 19-20, 22-23, 27-29 |
| A | entire text | 1-18, 21, 24-26 |
| A | JP 2012-30574 A (MITSUBISHI CHEMICALS CORP.) 16 February 2012 (2012-02-16) entire text | 1-29 |

Form PCT/ISA/210 (second sheet) (January 2015)

**INTERNATIONAL SEARCH REPORT**
**Information on patent family members**

International application No.
**PCT/JP2023/018171**

| Patent document cited in search report | Publication date (day/month/year) | Patent family member(s) | Publication date (day/month/year) |
|---|---|---|---|
| JP 2016-113563 A | 23 June 2016 | (Family: none) | |
| JP 2019-172879 A | 10 October 2019 | (Family: none) | |
| JP 2013-194086 A | 30 September 2013 | US 2013/0245180 A1<br>claims, paragraphs [0028], [0050], [0073], examples | |
| JP 2014-51558 A | 20 March 2014 | (Family: none) | |
| JP 2022-34100 A | 03 March 2022 | (Family: none) | |
| JP 2012-30574 A | 16 February 2012 | US 2013/0075480 A1<br>entire text | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012030574 A
- WO 2004111106 A
- WO 2007148604 A
- JP 650 A